(19) Europäisches Patentamt
European Patent Office
Office européen des brevets

(11) **EP 3 836 115 B1**

(12) **FASCICULE DE BREVET EUROPEEN**

(45) Date de publication et mention de la délivrance du brevet:
**04.06.2025 Bulletin 2025/23**

(21) Numéro de dépôt: **20209902.4**

(22) Date de dépôt: **25.11.2020**

(51) Classification Internationale des Brevets (IPC):
**G08G 1/01** *(2006.01)*     **G08G 1/065** *(2006.01)*
**G01C 21/34** *(2006.01)*

(52) Classification Coopérative des Brevets (CPC):
**G08G 1/0112; G08G 1/0129; G08G 1/065**

(54) **PROCEDE DE DETERMINATION D'EMISSIONS POLLUANTES ET/OU SONORES ET/OU DE PARAMETRES DE SECURITE ROUTIERE SUR UNE PORTION DE RESEAU ROUTIER**

VERFAHREN ZUR BESTIMMUNG VON SCHADSTOFF- UND/ODER LÄRMEMISSIONEN UND/ODER VERKEHRSSICHERHEITSPARAMETERN AUF EINEM ABSCHNITT EINES STRASSENNETZES

METHOD FOR DETERMINING THE POLLUTING AND/OR NOISE EMISSIONS AND/OR ROAD SAFETY PARAMETERS ON A PORTION OF A ROAD NETWORK

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **09.12.2019 FR 1913993**

(43) Date de publication de la demande:
**16.06.2021 Bulletin 2021/24**

(73) Titulaire: **IFP Energies nouvelles**
**92852 Rueil-Malmaison Cedex (FR)**

(72) Inventeurs:
• **DE NUNZIO, Giovanni**
**92852 RUEIL-MALMAISON CEDEX (FR)**
• **SABIRON, Guillaume**
**92852 RUEIL-MALMAISON CEDEX (FR)**
• **THIBAULT, Laurent**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
FR-A1- 3 049 653     FR-A1- 3 056 000
US-A1- 2016 133 131

• **THIBAULT L ET AL: "The Future of Road Mobility 'Research with Impact'", 17 October 2018 (2018-10-17), XP093117678, Retrieved from the Internet <URL:https://www.earpa.eu/ENGINE/FILES/EARPA/WEBSITE/UPLOAD/FILE/2018/form_forum_2018/programmaboekje_versie_def.pdf#page=51> [retrieved on 20240110]**
• **DE NUNZIO GIOVANNI ET AL: "Road Traffic Dynamic Pollutant Emissions Estimation: From Macroscopic Road Information to Microscopic Environmental Impact", ATMOSPHERE, vol. 12, no. 1, 31 December 2020 (2020-12-31), Basel, pages 53, XP093117649, ISSN: 2073-4433, DOI: 10.3390/atmos12010053**
• **LARAKI MOHAMED ET AL: "Vehicle speed trajectory estimation using road traffic and infrastructure information", 2020 IEEE 23RD INTERNATIONAL CONFERENCE ON INTELLIGENT TRANSPORTATION SYSTEMS (ITSC), 20 September 2020 (2020-09-20), pages 1 - 7, XP093117663, ISBN: 978-1-7281-4149-7, Retrieved from the Internet <URL:https://dx.doi.org/10.1109/ITSC45102.2020.9294337> [retrieved on 20240109], DOI: 10.1109/ITSC45102.2020.9294337**

- **YONG-HONG LIU ET AL: "A high temporal-spatial vehicle emission inventory based on detailed hourly traffic data in a medium-sized city of China", ENVIRONMENTAL POLLUTION, vol. 236, 1 May 2018 (2018-05-01), GB, pages 324 - 333, XP055724214, ISSN: 0269-7491, DOI: 10.1016/j.envpol.2018.01.068**
- **C. ASENSIO ET AL: "GPS-based speed collection method for road traffic noise mapping", TRANSPORTATION RESEARCH PART D: TRANSPORT AND ENVIRONMENT, vol. 14, no. 5, 1 July 2009 (2009-07-01), AMSTERDAM, NL, pages 360 - 366, XP055298373, ISSN: 1361-9209, DOI: 10.1016/j.trd.2009.03.008**
- **SHAOJUN ZHANG ET AL: "Fine-grained vehicle emission management using intelligent transportation system data", ENVIRONMENTAL POLLUTION, vol. 241, 1 October 2018 (2018-10-01), GB, pages 1027 - 1037, XP055724218, ISSN: 0269-7491, DOI: 10.1016/j.envpol.2018.06.016**
- **THIBAULT L ET AL: "A new GPS-based method to estimate real driving emissions", 2016 IEEE 19TH INTERNATIONAL CONFERENCE ON INTELLIGENT TRANSPORTATION SYSTEMS (ITSC), IEEE, 1 November 2016 (2016-11-01), pages 1628 - 1633, XP033028557, DOI: 10.1109/ITSC.2016.7795776**
- **GATELY CONOR K ET AL: "Urban emissions hotspots: Quantifying vehicle congestion and air pollution using mobile phone GPS data", ENVIRONMENTAL POLLUTION, BARKING, GB, vol. 229, 30 June 2017 (2017-06-30), pages 496 - 504, XP085179666, ISSN: 0269-7491, DOI: 10.1016/J.ENVPOL.2017.05.091**

## Description

### Domaine technique

L'invention concerne la caractérisation d'émissions polluantes et/ou sonores et/ou de paramètres de sécurité routière d'une portion de réseau routier.

### Technique antérieure

Selon l'Organisation Mondiale de la Santé (OMS), environ 18000 décès par jour sont attribuables à une mauvaise qualité de l'air, ce qui fait monter l'estimation à environ 6.5 millions de décès par an. La pollution atmosphérique représente également un fort enjeu financier : une commission d'enquête sénatoriale estime que le coût total de la pollution de l'air s'établit entre 68 et 97 milliards d'euros par an pour la France, dans une évaluation rendue en juillet 2015, intégrant à la fois les dommages sanitaires de la pollution mais également ses conséquences sur les bâtiments, les écosystèmes et l'agriculture.

Le secteur des transports représente toujours l'une des sources les plus importantes de polluants, malgré les nombreuses mesures mises en place par les pouvoirs publics et les avancées technologiques dans le domaine. Les transports, tous modes confondus, sont responsables d'environ 50% des émissions globales d'oxydes d'azote (NOx) et environ 10% des émissions de particules PM2,5 (par PM2,5, on entend des particules polluantes, PM pour « Particulate Matter » en anglais, dont le diamètre est inférieur à 2,5 $\mu$m). Le transport routier seul représente une part considérable de cet apport dû aux transports, avec le 58% des NOx et le 73% des particules PM2,5.

Ces émissions sont dues principalement à trois facteurs : les émissions à l'échappement, les émissions d'abrasion, les émissions d'évaporation. Si les poids lourds sont les principaux émetteurs de polluants, ce sont les véhicules particuliers, plus représentés dans les zones urbaines fortement peuplées, qui ont l'impact le plus élevé sur l'exposition des citoyens à une mauvaise qualité de l'air.

Les mesures mises en place au niveau local pour gérer l'utilisation des transports (comme une meilleure planification des transports et les mesures pour inciter le transfert modal), ainsi que le progressif renouvellement du parc automobile, ont contribué à limiter les émissions de gaz à l'échappement du transport routier dans les villes et les agglomérations urbaines. En effet, dans le monde, l'activité liée au transport routier a augmenté d'un quart au cours de la dernière décennie, mais les émissions de NOx et de particules ont respectivement augmenté de 5% et diminué de 6%. Malgré ces améliorations, les niveaux de pollution dépassent encore les seuils fixés par l'OMS dans de nombreuses villes.

A l'heure actuelle, les services en charge de l'application opérationnelle des politiques de déplacements ne disposent pas d'outils leur permettant de connaître les impacts des aménagements routiers en termes d'émissions polluantes, de bruit et de sécurité routière. Des prises de décisions telles que la modification de la vitesse maximale autorisée, l'implantation d'un carrefour à feux ou encore d'un ralentisseur ont un impact direct et significatif sur la vitesse et l'accélération des véhicules, donc sur leurs émissions polluantes et leur bruit. A ce jour, ces impacts ne sont pas connus et ne sont donc pas pris en compte par les villes.

Cette méconnaissance est étroitement liée à la difficulté de collecter des données réelles représentatives permettant une étude de ces impacts. Aujourd'hui, les nouvelles technologies numériques offrent la possibilité de résoudre ce problème. Il est en effet possible de collecter beaucoup plus simplement un large volume de données réelles de mobilité (enregistrements, par exemple de type GPS « Global Positioning System », des trajets quotidiens de milliers de conducteurs particuliers, aussi appelés FCD ou « Floating Car Data »).

La littérature démontre qu'il est aujourd'hui possible de caractériser les émissions polluantes (L. Thibault, P. Degeilh, O. Lepreux, L. Voise, G. Alix, G. Corde, "A new GPS-based method to estimate real driving emissions", in IEEE 19th International Conference on Intelligent Transportation Systems, 2016), le bruit (C. Asensio, J. M. López, R. Pagán, I. Pavón, and M. Ausejo, "GPS-based speed collection method for road traffic noise mapping," Transp. Res. Part D Transp. Environ., vol. 14, no. 5, pp. 360-366, 2009) et l'adhérence au sol (R. Vaiana et al., "Driving behavior and traffic safety: an acceleration-based safety evaluation procedure for smartphones," Mod. Appl. Sci., vol. 8, no. 1, p. 88, 2014) à partir de signaux GPS.

On connaît notamment le "Comprehensive Modal Emission Model" (CMEM - Modèle global d'émissions modales) (M. Barth, "The Comprehensive Modal Emission Model (CMEM) for Predicting Light-Duty Vehicle Emissions," in Transportation Planning and Air Quality IV: Persistent Problems and Promising Solutions, 2000, pp. 126-137), le Passenger car and Heavy duty Emission Model (PHEM) (S. Hausberger, M. Rexeis, M. Zallinger, and R. Luz, "PHEM User guide for version 10," TUG/FVT Rep., pp. 1-57, 2010) et le Virginia Tech Microscopic energy and emission model (VT-Micro) (H. Rakha, K. Ahn, and A. Trani, "Development of VT-Micro model for estimating hot stabilized light duty vehicle and truck emissions," Transp. Res. Part D Transp. Environ., vol. 9, no. 1, pp. 49-74, 2004).

Néanmoins, ces quelques outils existants de monitoring de la qualité de l'air ne permettent pas d'estimer avec précision la part d'émissions polluantes, sonores ou l'impact sur la sécurité routière en usage réel, ni de déterminer avec précision leur localisation dans l'espace. En effet, dans ces méthodes, l'estimation d'émissions de polluants est basée sur une vitesse moyenne sur des segments de route de plusieurs kilomètres, comme dans la méthodologie COPERT (« COmputer Program to calculate Emissions from Road Transports » pour « Programme informatique pour calculer les émissions des transports routiers », programme financé par l'agence européenne de l'environnement http://emisia.com/products/copert). Ces méthodes ne prennent donc pas en compte les phases d'accélération/décélération existantes sur ces segments alors que ces phases génèrent de fortes émissions polluantes et/ou sonores et qu'elles peuvent générer un impact sur la sécurité routière notamment par un manque d'adhérence du véhicule au sol.

De plus, les spécificités technologiques des véhicules ne sont pas correctement prises en compte, notamment pour des véhicules Diesel récents, ce qui cause d'importantes erreurs.

Par conséquent, il s'avère difficile pour les villes de prendre les bonnes décisions en matière d'aménagement de l'infrastructure routière sans avoir à disposition des outils précis d'évaluation de ces impacts en terme de pollution, bruit et/ou sécurité routière.

Compte tenu de l'inexistence de ces outils, certaines collectivités réalisent directement des modifications d'infrastructures ou de règlementation du réseau routier et éventuellement réalisent une étude a posteriori des émissions polluantes, sonores et/ou de risques en termes de sécurité routière.

Lorsqu'elle est réalisée, cette étude a posteriori est dans certains cas quantitative et dans d'autres cas seulement qualitative.

Lorsqu'elle est quantitative, des mesures d'émissions polluantes/sonores et/ou de risques de sécurité routière sont alors effectuées autour des modifications. Toutefois, ces mesures restent très locales et ne permettent pas de définir l'impact précisément sur la portion du réseau routier et notamment ne permet pas d'évaluer les variations locales. De plus, ces mesures sont onéreuses. Elles représentent un coût important pour les collectivités.

Lorsqu'elle est qualitative, l'étude se limite à une approche basée notamment sur des avis des utilisateurs et riverains. Cette approche est donc subjective et peu fiable.

Quelle que soit la façon de réaliser l'étude a posteriori, la réalisation des modifications d'infrastructures sont très onéreuses. Or, réaliser l'infrastructure et éventuellement l'étude a posteriori représente un coût significatif pour les collectivités. S'il ressort de l'étude que l'infrastructure n'a rien amélioré voire qu'elle a détérioré la situation, il pourra s'avérer nécessaire de réaliser une nouvelle modification. Les coûts engendrés peuvent donc être très importants lors de ces essais/erreurs avant d'obtenir une solution satisfaisante. De plus, les études menées ne sont pas précises et permettent rarement d'évaluer l'impact des modifications réalisées sur plusieurs critères (pollution, bruit et sécurité routière par exemple).

Afin d'éviter la réalisation d'infrastructures ou de règlementations inutiles et d'études imprécises et incomplètes, il est donc nécessaire de pouvoir déterminer précisément les émissions polluantes, sonores et les risques vis-à-vis de la sécurité routière de portion de réseau routier notamment lors de modifications d'infrastructures ou de règlement sur ces portions, sans avoir à réaliser physiquement les modifications au préalable.

Le document XP093117678 décrit une application de type smartphone pour mesurer des profils de vitesse et d'altitude d'un véhicule lors d'un voyage et un logiciel de simulation en nuage, couplé au smartphone du conducteur, utilisé pour estimer les émissions polluantes, en tenant compte de caractéristiques de chaque véhicule.

Par ailleurs le document XP055724214 présente une méthodologie pour établir un inventaire des émissions de véhicules sur route.

Pour répondre à ces enjeux, l'invention concerne un procédé de détermination de paramètres physiques d'émissions polluantes et/ou sonores et/ou de sécurité routière d'un parc de véhicules sur une portion de réseau routier.

## Résumé de l'invention

L'invention concerne un procédé de détermination de paramètres physiques d'émissions polluantes et/ou sonores et/ou de sécurité routière d'un parc prédéfini de véhicules prédéterminés sur une portion de réseau routier selon la revendication 1 en annexe.

De préférence, on réalise une agrégation spatiale des positions mesurées.

De manière avantageuse, l'agrégation spatiale comprend une correction des positions mesurées pour correspondre à des positions de ladite portion de réseau routier.

Selon une mise en œuvre de l'invention, on découpe ladite portion de réseau routier en segments de longueur prédéterminée et on réalise les étapes b), c) et d) sur chacun desdits segments de longueur prédéterminée.

Préférentiellement, lorsqu'on réalise ladite agrégation de la distribution desdites caractéristiques physiques, ledit paramètre physique est pris égal à la valeur de ladite distribution desdites caractéristiques physiques correspondante à un quantile déterminé, de préférence le quantile prédéterminé étant le soixantième centile

Selon l'invention, ledit paramètre physique comprend la quantité de NOx émise, la quantité de particules PM2,5 émise, la quantité de gaz à effet de serre émise, le niveau sonore émis et/ou une variable représentative de l'impact sur la sécurité routière sur ladite partie de ladite portion du réseau routier, de préférence la variable représentative de l'impact sur la sécurité routière étant l'adhérence à ladite partie de portion du réseau routier.

Selon l'invention, lesdites caractéristiques physiques comprennent la quantité de NOx émise, la quantité de particules PM2,5 émise, la quantité de gaz à effet de serre émise, le niveau sonore émis et/ou une variable représentative de l'impact sur la sécurité routière de chaque véhicule prédéterminé sur ladite partie de ladite portion du réseau routier, de préférence la variable représentative de l'impact sur la sécurité routière étant l'adhérence dudit véhicule prédéterminé à ladite partie de portion du réseau routier. De manière avantageuse, les caractéristiques des véhicules prédéterminés comprennent la masse des véhicules, le type de motorisation et le type de post-traitement des gaz-brûlés. Dans une variante du procédé de l'invention, on applique un flux de trafic, ledit flux de trafic comprenant de préférence le débit de véhicules sur ladite portion du réseau routier, en fonction du jour et de l'heure considérés.

Selon un mode de réalisation de l'invention, on affiche ledit paramètre physique sur une carte routière, de préférence au moyen d'un téléphone intelligent, un ordinateur, une tablette numérique ou un système informatique.

De préférence, on affiche ledit paramètre physique sur une carte routière pour une configuration choisie par l'utilisateur, ladite configuration pouvant comprendre ledit paramètre physique à afficher, le parc prédéfini de véhicules prédéterminés, le niveau de sensibilité dudit paramètre physique, le quantile prédéterminé et/ou le flux de trafic.

Dans une variante de l'invention, on détermine un paramètre de confiance dudit paramètre physique.

Dans un mode de réalisation préféré de l'invention, lors de l'étape b), pour chaque véhicule prédéterminé, on acquiert au moins une caractéristique du véhicule prédéterminé relatif à la conception dudit véhicule et on construit pour ledit véhicule :

i) un modèle dudit véhicule qui relie au moins le profil de vitesse au couple et au régime dudit moteur au moyen d'au moins une caractéristique du véhicule prédéterminé ;
ii) un modèle dudit moteur qui relie ledit couple et ledit régime dudit moteur aux émissions de polluants et/ou sonores en sortie dudit moteur au moyen d'au moins une caractéristique du véhicule prédéterminé ; et
iii) un modèle dudit système de post-traitement qui relie lesdites émissions de polluants et/ou sonores en sortie dudit moteur au moyen aux émissions de polluants et/ou sonores en sortie dudit système de post-traitement au moyen d'au moins une caractéristique du véhicule prédéterminé ;

et on détermine ledit couple et ledit régime dudit moteur au moyen dudit modèle de véhicule et dudit profil de vitesse ;
on détermine les émissions de polluants et/ou sonores en sortie dudit moteur au moyen dudit modèle du moteur et dudit couple et dudit régime dudit moteur ;
et on détermine les émissions de polluants et/ou sonores du véhicule au moyen dudit modèle du système de post-traitement et desdites émissions de polluants et/ou sonores en sortie dudit moteur, les dites caractéristiques physiques étant les émissions de polluants et/ou sonores en sortie du système de post-traitement.

L'invention concerne aussi un produit programme d'ordinateur téléchargeable depuis un réseau de communication et/ou enregistré sur un support lisible par ordinateur et/ou exécutable par un processeur ou un serveur, comprenant des instructions de code de programme pour la mise en œuvre du procédé selon l'une des caractéristiques précédentes, lorsque ledit programme est exécuté sur un ordinateur, un téléphone portable ou un appareil informatique.

L'invention concerne également l'utilisation du procédé selon l'une des caractéristiques décrites précédemment pour modifier l'infrastructure routière, étendre le réseau des transports en commun et/ou modifier les mesures de contrôle du trafic routier.

**Liste des figures**

D'autres caractéristiques et avantages du dispositif et/ou du produit selon l'invention, apparaîtront à la lecture de la description ci-après d'exemples non limitatifs de réalisations, en se référant aux figures annexées et décrites ci-après.

La figure 1 représente les étapes du procédé selon un mode de réalisation de l'invention.

La figure 2 illustre un exemple d'histogramme de répartition des caractéristiques physiques selon l'invention.

La figure 3 représente les étapes de détermination des paramètres physiques d'émissions polluantes selon l'invention.

La figure 4 représente un premier exemple de visualisation d'émissions de NOx sur une portion de réseau routier sur la carte routière, à partir du procédé selon l'invention.

La figure 5 représente un deuxième exemple de visualisation d'émissions de NOx sur une portion de réseau routier sur la carte routière, à partir du procédé selon l'invention, ce deuxième exemple se distinguant de l'exemple de la figure 4 par l'ajout d'un deuxième feu de signalisation.

La figure 6 représente un exemple de visualisation d'émissions de NOx sur une portion de réseau routier sur la carte routière, identique aux figures 4 et 5, à partir de la méthode COPERT de l'art antérieur.

La figure 7 illustre un mode de réalisation de l'étape b) du procédé selon l'invention.

**Description des modes de réalisation**

L'invention concerne un procédé de détermination de paramètres physiques représentatifs d'émissions polluantes et/ou sonores et/ou de sécurité routière d'un parc prédéfini de véhicules prédéterminés sur une portion de réseau routier. Le paramètre physique peut être par exemple :

- Pour les émissions polluantes : la quantité de particules fines émises (PM2,5 par exemple), la quantité de NOx émis, la quantité de gaz à effet de serre émise ($CO_2$ par exemple), etc...
- Pour les émissions sonores : le niveau de bruit estimé en dB (Décibel), etc. ou
- Pour la sécurité routière : l'adhérence des véhicules au sol pour évaluer l'impact sur la sécurité routière, etc.

L'objet de ce procédé est de déterminer au moins un de ces paramètres physiques sur une portion de réseau routier, actuel ou en vue d'une modification, par exemple, ajout d'un feu de signalisation, ajout d'un rond-point, modification de la vitesse maximale, ajout d'un ralentisseur, ou suppression d'un aménagement sur le réseau routier.

Le parc prédéfini peut être le parc actuel de véhicules traversant la portion de réseau routier. Il peut être défini par l'utilisateur en fonction des historiques d'enregistrement et/ou de la connaissance préalable du parc de véhicules de la zone considérée. Le parc prédéfini peut également être un parc futur, en vue de l'application d'une future législation (interdiction à certaines catégories de véhicules par exemple les plus vieux et/ou les plus polluants, autorisation de circulation restreinte aux véhicules électriques par exemple).

Les véhicules prédéterminés sont les véhicules utilisés dans le parc prédéfini. Ils dépendent donc du parc considéré et peuvent être déterminés par l'utilisateur du procédé. Ainsi, le parc prédéfini est une répartition en nombre ou en pourcentage de véhicules, de chaque véhicule prédéterminé, circulant sur la portion de réseau routier.

Le procédé met en œuvre au moins un moyen de mesure de positions, vitesses et/ou altitudes sur la portion de réseau routier. De préférence, le moyen de mesure peut notamment être un système de géolocalisation GPS (« Global Positionning System ») embarqué sur un véhicule ou celui d'un téléphone intelligent. Ce moyen de mesure permet de mesurer au moins les positions, vitesses et altitudes d'un véhicule sur la portion de réseau routier. Ces données mesurées constituent alors un historique de données de trajets réalisés, appelées données FCD (de l'anglais « floating car data »). De préférence, il est préférable de réaliser plusieurs mesures de positions, vitesses et altitudes sur la même portion de réseau routier, de manière à fiabiliser les données mesurées. De préférence, pour donner un ordre de grandeur, on réalise au moins cent mesures de trajets, chaque trajet mesurant la position, la vitesse et l'altitude le long de la portion de réseau routier, de manière à avoir des données fiables.

De plus, le procédé met en œuvre les étapes suivantes, de préférence par des moyens informatiques :

a) On mesure au moins les positions, vitesses et/ou altitudes par le moyen de mesure (un GPS par exemple) sur la portion de réseau routier, de préférence grâce à plusieurs véhicules circulant sur la portion de réseau routier. En d'autres termes, on enregistre les données de positions, vitesses et altitudes de véhicules circulant sur la portion du réseau routier, grâce au moyen de mesure). Puis, on détermine un profil de vitesse sur la portion de réseau routier, notamment à partir des vitesses mesurées. Par exemple, le profil de vitesse peut correspondre à la moyenne des vitesses enregistrées pour chaque point de la portion du réseau routier. Le profil de vitesse s'entend comme une variation de vitesse le long d'une portion de réseau routier ou d'une partie de celle-ci. Chaque mesure de position, vitesse et altitude correspond à un trajet de véhicule réalisé sur la portion de réseau routier, les trajets sont réalisés à différents instants (par instants différents, on entend que le l'instant de départ sur point de départ et/ou l'instant d'arrivée sur le point d'arrivée sont différents ou au moins que sur la portion de réseau routier, pour deux trajets différents, il existe au moins un point de passage traversé à deux instants différents) et pour le même ou des véhicules différents. Utiliser différents véhicules permet de diversifier les données et donc fiabiliser le profil de vitesse.

Le profil de vitesse peut par exemple être déterminé par la moyenne des vitesses mesurées à chaque point de la portion de réseau routier. Le profil de vitesse permet de prendre en compte les phases d'accélération et décélération sur la portion de réseau routier, ce qui permet d'améliorer la précision des émissions polluantes, sonores et la sécurité routière.

Le profil de vitesse définit la vitesse des véhicules à chaque position de la portion du réseau routier, la position pouvant être définie par exemple par la latitude et la longitude.

On peut aussi déterminer les variations de pente de la portion de réseau routier, à partir des altitudes mesurées, par exemple, en déterminant à chaque point de la portion de réseau routier, l'altitude moyenne des altitudes mesurées. La prise en compte des variations de pente permet encore d'améliorer cette précision, notamment lorsque le véhicule est sur une pente en montée, les émissions polluantes et sonores sont supérieures à une portion de route sans pente ou lorsque le véhicule est sur une pente descendante, les risques de perte d'adhérence sont accrus et donc la sécurité routière est réduite.

b) On détermine (on calcule par exemple) au moins une caractéristique physique sur au moins une partie de la portion de réseau routier pour chacun des véhicules prédéterminés du parc, en fonction des caractéristiques des véhicules prédéterminés, du profil de vitesse déterminé et éventuellement des variations de pentes déterminées. Par partie de portion de réseau routier, on entend que la portion de réseau routier peut être découpée en une ou plusieurs zones. Ainsi, on peut déterminer la caractéristique physique sur une zone de courte longueur, par exemple en la quantifiant, ce qui permet d'augmenter la précision spatiale des émissions de pollution, ou sonores et/ou la sécurité routière. Par caractéristique physique, on entend la quantité d'émissions polluantes, par exemple de NOx, de particules PM2,5, de gaz à effet de serre tel que le $CO_2$, le niveau de bruit émis et/ou les risques de sécurité routière tel que le niveau d'adhérence à la route de chaque véhicule prédéterminé sur la partie de portion du réseau routier concerné. Par exemple, on peut calculer les émissions polluantes, les émissions sonores ou le niveau d'adhérence de chaque véhicule à partir du profil de vitesse déterminé à l'étape a).

c) On applique (ou on affecte) le parc au paramètre physique déterminé à l'étape précédente pour obtenir une répartition des caractéristiques physiques sur le parc prédéfini, le parc définissant le nombre (ou le pourcentage) de chaque véhicule prédéterminé. En appliquant le parc, on donne une distribution de chaque caractéristique physique représentative du nombre de chacun des véhicules prédéterminés dans le parc prédéfini. Ainsi, à chaque véhicule prédéterminé, est associée une valeur de la caractéristique physique et une répartition (par exemple un pourcentage représentatif du nombre de chaque véhicule prédéterminé dans le parc prédéfini) associée à cette valeur de chaque caractéristique physique. On obtient une distribution (également appelée répartition) des différentes caractéristiques physiques (chacune des valeurs dépendant des véhicules prédéterminés) en fonction du parc prédéfini de véhicules prédéterminés.

d) On détermine (ou on définit ou on calcule) le paramètre physique sur la partie de la portion du réseau routier au moyen de la répartition des caractéristiques physiques obtenue à l'étape c). On peut par exemple déterminer le paramètre physique en calculant un quantile prédéterminé, de préférence la moyenne ou le soixantième centile de la répartition des caractéristiques sur le parc prédéfini.

De ce fait, on peut déterminer les émissions de NOx, de gaz à effet de serre tel que le $CO_2$, de particules type PM2,5, le niveau sonore, l'adhérence du véhicule au sol sur la portion de réseau routier. On peut ainsi appréhender l'impact d'une modification du parc de véhicules en interdisant ou non la circulation de certains véhicules. On peut également évaluer l'impact d'une modification de l'infrastructure routière (ajout d'un feu de signalisation, modification de la règlementation de vitesses maximales autorisées, ajout d'un rond-point, d'un ralentisseur etc...) sur chaque paramètre physique. Ces caractéristiques objectives permettent d'éviter la réalisation physique de ces aménagements des infrastructures ou de ces modifications de règlementation routière avec des analyses et mesures a posteriori pour évaluer le retour d'expérience, une fois les aménagements réalisés. En effet, d'une part, ces aménagements sont très onéreux pour les collectivités (mairies, départements, régions) et d'autre part, les analyses pour évaluer ces modifications sont également onéreuses car elles nécessitent la mise en place de moyens de mesure pendant des durées de temps assez longues et des post-traitements des données enregistrées. De plus, les paramètres physiques déterminés par le procédé de l'invention sont des données objectives alors qu'actuellement, les données, faute de moyen permettant des analyses chiffrés, sont souvent des données subjectives des utilisateurs des portions de route et/ou des riverains. Le procédé selon l'invention permet donc d'économiser des coûts liés à la réalisation physique des infrastructures ou aménagement routiers et aux analyses des modifications réalisées. De plus, il permet de déterminer des données objectives des critères comme les émissions polluantes, les émissions sonores et la sécurité routière. De plus, par une analyse multicritère, il permet une aitre au choix de modification de l'infrastructure ou de l'aménagement du réseau routier. Par infrastructure, on entend tout élément physique tel qu'un feu de signalisation, un carrefour, un rond-point, une voie d'accélération/décélération, l'ajout ou la suppression de voies etc... Par aménagement, on entend toute modification de la règlementation ou de la circulation, par exemple, modification de la vitesse maximale, synchronisation ou non des deux de signalisation.

Le paramètre physique agrégé obtenu correspond à un paramètre physique représentatif de l'émission polluante et/ou sonore et/ou de la sécurité routière sur la portion de réseau routier. Par exemple, il peut être considéré comme une moyenne ou le soixantième centile de la répartition des caractéristiques physiques du parc prédéfini sur la portion de réseau routier.

Préférentiellement, les mesures de positions, vitesses et altitudes peuvent être réalisées à une fréquence d'acquisition comprise entre 0,1 et 1000 Hz. Ainsi, la fréquence d'acquisition est suffisante pour permettre une location précise dans l'espace et éviter une gestion trop importante de ces données d'acquisition. Cette fréquence d'acquisition peut notamment être obtenue par des GPS ou certaines applications comme Geco Air™ (IFP Energies nouvelles, France).

De manière encore plus préférée, la fréquence d'acquisition peut être comprise entre 0,5 et 10 Hz. Cette configuration offre un bon compromis entre précision spatiale et rapidité des calculs.

De préférence, on peut réaliser une agrégation spatiale des positions mesurées, par exemple en corrigeant les positions mesurées pour correspondre à des positions de la portion de réseau routier. En effet, l'imprécision des mesures réalisées par FCD et/ou GPS peut amener à obtenir des données de positions non situées sur la portion de réseau routier concernée. La correction permet de réduire ces imprécisions en ramenant artificiellement les positions sur la portion de réseau routier.

Selon un mode de réalisation préféré de l'invention, on peut découper la portion de réseau routier en segments de longueur prédéterminée, la longueur prédéterminée pouvant être définie par l'utilisateur du procédé ou par le client final, par exemple, les administrations des villes, des départements et/ou des régions. Ce découpage en segments permet d'augmenter la précision des paramètres physiques (et des caractéristiques physiques), notamment leur précision spatiale. Il permet donc d'estimer plus finement une augmentation ou une réduction locale d'un paramètre physique (et d'une caractéristique physique). Plus la longueur prédéterminée est faible et plus la précision, notamment spatiale, est bonne.

On peut alors réaliser les étapes b), c) et d) sur chacun des segments de longueur prédéterminée, chacun de ces segments représentant alors une partie de la portion de réseau routier. Ainsi, on peut déterminer sur chaque segment les caractéristiques physiques et par conséquent le paramètre physique. On peut ainsi évaluer plus précisément les variations locales de ces paramètres. La précision est donc améliorée.

Selon une mise en œuvre avantageuse de l'invention, à l'étape d), on peut déterminer le paramètre physique sur au moins une partie de la portion du réseau routier en agrégeant la répartition des caractéristiques physiques obtenue à l'étape c). En effet, l'étape c) permet d'obtenir une répartition des caractéristiques physiques du parc prédéfini de véhicules prédéterminés sur la partie de portion du réseau routier. Une étape d'agrégation permet de passer des caractéristiques physiques distribuées à un paramètre physique qui peut être de préférence un scalaire, ce scalaire pouvant correspondre à une valeur objective représentative de la partie de la portion de réseau routier. Alternativement, le paramètre physique pourrait représenter une distribution spatiale ou un ensemble de valeurs, par exemple, l'ensemble de valeur pourrait comprendre un premier scalaire représentant un quantile déterminé et un deuxième scalaire représentant l'écart-type. Ce paramètre physique caractérise ainsi la partie du tronçon de réseau routier, de manière objective, robuste et précise, en termes d'émissions de pollution, d'émissions sonores et/ou de sécurité routière.

De préférence, l'agrégation de la répartition des caractéristiques physiques peut être réalisée en prenant le paramètre physique égal à la valeur de la répartition des caractéristiques physiques correspondant à un quantile prédéterminé. En d'autres termes, en agrégeant la répartition des caractéristiques physiques de l'étape c), le paramètre physique agrégé est la valeur de la répartition obtenue à l'étape c) pour laquelle le quantile déterminé des valeurs de la répartition est inférieur à ladite valeur : l'ensemble des valeurs de la répartition inférieures au paramètre physique agrégé représente le quantile prédéterminé. L'utilisation d'un quantile permet d'affiner la précision de l'agrégation en obtenant un résultat fiable, robuste et précis.

Préférentiellement, le quantile prédéterminé peut être le soixantième centile. Ainsi, 60% des valeurs de la répartition des caractéristiques physiques obtenues à l'étape c) sont inférieures au paramètre physique agrégé. L'utilisation du soixantième centile offre un bon compromis sur la précision et la fiabilité pour différents types de routes et différents types de véhicules. Les quantiles sont les valeurs qui divisent un jeu de données en intervalles contenant le même nombre de données. Les quantiles d'une variable sont les valeurs que prend la variable pour des valeurs de répartition sous le quantile considéré. Par exemple, on note $q$-quantiles l'ensemble des quantiles des multiples de la fraction $1/q$. Il y a, au total $(q-1)$ $q$-quantiles. Le $p$-ième $q$-quantile d'une variable $X$ est donc défini comme la valeur $x_{(p/q)}$ telle que les valeurs inférieures à $x_{(p/q)}$ représentent une fraction p/q de la répartition de X. En d'autres termes, par exemple, la distribution d'une valeur de la variable X inférieure au p-ième quantile $x_{(p/q)}$ égale à p/q est :

**[Math 1]**

$$P(X \leq x_{(p/q)}) = \frac{p}{q}$$

P étant la fonction de distribution de la variable X.

Les centiles (aussi appelés percentiles) sont les quantiles des multiples du centième. Ainsi, le soixantième centile cent représente l'ensemble des valeurs de la variable X telles qu'elles représentent 60% de la répartition de X. En d'autres termes, la répartition du soixantième centile peut s'écrire :

**[Math 2]**

$$P(X \leq cent) = {}^{60}/_{100}$$

Avantageusement, le paramètre physique d'émissions polluantes et/ou sonores et/ou de sécurité routière peut comprendre la quantité de polluants émise (de NOX et/ou de particules polluantes type PM2,5 par exemple), la quantité de gaz à effet de serre émise, le niveau sonore émis et/ou une variable représentative de l'impact sur la sécurité routière (appelée également paramètre de sécurité routière), de préférence la variable représentative de l'impact sur la sécurité routière étant l'adhérence à ladite partie de portion du réseau routier. Ainsi, le paramètre physique d'émissions polluantes et/ou sonores et/ou de sécurité routière est une donnée objective représentative de la pollution émise, du bruit et/ou de la sécurité routière résultant de la portion de réseau routier, notamment par ses infrastructures et aménagements, et du parc de véhicules prédéterminés.

Selon une configuration de l'invention, les caractéristiques des véhicules prédéterminés peuvent comprendre la masse des véhicules, le type de motorisation et le type de post-traitement des gaz brûlés. Ainsi, ces caractéristiques permettent de définir précisément les émissions polluantes et sonores et l'adhérence à la route pour chaque type de véhicule prédéterminé. Ainsi, la précision des caractéristiques physiques de chaque véhicule prédéterminé est améliorée. Par conséquent, les paramètres physiques des émissions polluantes, sonores et/ou de sécurité routière sont plus précis.

Selon un aspect avantageux de l'invention, on peut appliquer un flux de trafic à la caractéristique physique déterminée à l'étape c), le flux de trafic comprenant de préférence le débit de véhicules sur la portion du réseau routier, en fonction du jour et de l'heure considérés. Le flux de trafic permet d'évaluer l'impact au cours de la journée des émissions polluantes, sonores et/ou de la sécurité routière en fonction du débit de véhicules sur la portion (ou sur une partie de cette portion) du réseau routier.

Le flux de trafic peut notamment être déterminé par des débits de véhicules sur la portion du réseau routier par tranches horaires, par exemple toutes les dix minutes. Pour cela, on peut par exemple mesurer le flux de trafic au cours de la journée, de préférence sur plusieurs jours. Ainsi, on récupère un historique du trafic et de sa variation journalière enregistrés au cours de la journée.

Selon une autre variante, le flux de trafic peut être déterminé par des simulations représentant un futur flux de trafic, par exemple issues d'un futur aménagement du réseau de transports en commun ou de futures mesures de régulation du trafic.

En appliquant le flux de trafic à l'issue de la phase c), on évalue plus précisément les variations horaires, par exemple, au cours de la journée, des caractéristiques physiques. Pour appliquer le flux de trafic, on multiplie chaque valeur de la répartition des caractéristiques physiques par le débit de véhicules de la tranche horaire et/ou journalière concernée. Après avoir appliqué le flux de trafic, on réalise l'étape d) d'agrégation de la répartition obtenue après avoir appliqué le flux de trafic. Ainsi, le paramètre physique agrégé obtenu varie au cours du temps, par exemple par tranches de dix minutes. Cela permet d'évaluer l'impact de la congestion du trafic au cours de la journée sur les émissions polluantes, sonores ou sur les risques en termes de sécurité routière.

Selon un aspect de l'invention, on peut afficher le paramètre physique sur une carte routière, de préférence au moyen d'un téléphone intelligent, un ordinateur, une tablette numérique ou un système informatique. Ainsi, on obtient une cartographie du paramètre physique que l'utilisateur peut visualiser. Cette visualisation permet de mieux répertorier les zones critiques où sont concentrées les émissions polluantes, sonores ou les risques sur la sécurité routière. Cette cartographie est également utile pour évaluer l'impact de modifications d'infrastructure ou de réglementation sur la portion (ou une partie de cette portion) du réseau routier.

Cette cartographie peut également permettre de visualiser simultanément ou successivement les impacts d'émissions polluantes, sonores et sécurité routière. Elle aide donc l'utilisateur à choisir un compromis optimal entre ces trois critères pour modifier l'infrastructure et/ou la règlementation d'au moins une partie de la portion du réseau routier. De préférence, on peut afficher le paramètre physique sur une carte routière pour une configuration choisie par l'utilisateur. La configuration peut comprendre le paramètre physique à afficher, le parc prédéfini de véhicules prédéterminés, la longueur prédéterminée des segments lorsque la portion du réseau routier est découpée en segments, le niveau de sensibilité du paramètre physique (le niveau de sensibilité étant la précision affichée, par exemple par tranches de 200mg/km pour les émissions de PM2,5), le quantile prédéterminé et/ou le flux de trafic. Ainsi, on peut voir l'influence de ces différents paramètres afin d'augmenter la précision des résultats obtenus en terme de valeur et en terme de localisation spatiale.

Selon une mise en œuvre avantageuse de l'invention, on peut déterminer un paramètre de confiance du paramètre physique. Ce paramètre de confiance va notamment dépendre du nombre de mesures de positions, vitesses et altitudes mesurées à l'étape a), ces mesures étant utilisées pour déterminer le profil de vitesse et les variations d'altitudes de la portion de réseau routier. Il peut également dépendre d'autres paramètres. Il peut être quantitatif ou qualitatif.

Ce paramètre de confiance peut également être affiché sur la carte routière.

Il permet de prendre en compte la fiabilité des résultats obtenus.

Selon un mode de réalisation préféré de l'invention, lors de l'étape b), pour chaque véhicule prédéterminé, on peut acquérir au moins une caractéristique du véhicule prédéterminé relatif à la conception de chaque véhicule prédéterminé et on construit pour chaque véhicule prédéterminé :

i) un modèle de chaque véhicule prédéterminé qui relie le profil de vitesse, et de préférence le profil de pente, au couple et au régime du moteur du véhicule prédéterminé au moyen d'au moins une caractéristique du véhicule prédéterminé (par exemple la masse du véhicule et de préférence son inertie);

ii) un modèle du moteur du véhicule prédéterminé relie le couple et le régime du moteur du véhicule prédéterminé aux émissions de polluants et/ou sonores et/ou aux risques de sécurité routière en sortie du moteur au moyen d'au moins une caractéristique du véhicule prédéterminé (par exemple des caractéristiques tel que le type de moteur, Diesel, essence, électrique, sa cylindrée, ses performances etc...) ; et

iii) un modèle du système de post-traitement qui relie respectivement les émissions de polluants et/ou sonores et/ou les risques de sécurité routière en sortie du moteur au moyen aux émissions de polluants et/ou sonores et/ou les risques de sécurité routière en sortie du système de post-traitement au moyen d'au moins une caractéristique du véhicule prédéterminé (par exemple, les caractéristiques techniques du système de post-traitement, performances du post-traitement par exemple) ;

et on détermine le couple et le régime du moteur au moyen du modèle de véhicule et du profil de vitesse (et de préférence au profil de pente) ; on détermine les émissions de polluants et/ou sonores et/ou éventuellement les risques de sécurité routière en sortie du moteur au moyen du modèle du moteur et du couple et du régime du moteur ; et on détermine les émissions de polluants et/ou sonores et/ou les risques de sécurité routière du véhicule au moyen du modèle du système de post-traitement et des émissions de polluants et/ou sonores et/ou les risques de sécurité routière en sortie du moteur.

Les émissions de polluants et/ou sonores et/ou les risques de sécurité routière du véhicule en sortie du moyen du modèle du système de post-traitement correspondent aux caractéristiques physiques en sortie de l'étape b) du procédé selon l'invention.

De ce fait, les émissions polluantes, sonores et/ou les risques de sécurité routière sont caractérisés précisément pour chaque véhicule prédéterminé grâce à des caractéristiques du véhicule, du moteur et du ou des systèmes de post-traitement. Par conséquent, la précision du paramètre physique est améliorée sur la portion de réseau routier.

*Détermination des émissions polluantes et/ou sonores de chaque véhicule prédéterminé*

Modèle de véhicule

Le modèle du véhicule peut par exemple relier le profil de vitesse et de préférence le profil de pente au couple et au régime du moteur de chaque véhicule prédéterminé, au moyen d'au moins un paramètre macroscopique, par exemple la masse du véhicule, la puissance maximale et le régime du moteur associé, la vitesse maximale, le type de transmission....

Le modèle du véhicule peut associer un modèle de dynamique du véhicule et un modèle de transmission du véhicule. Le modèle de dynamique du véhicule relie le profil de vitesse et de préférence le profil de pente à la puissance estimée du véhicule au moyen d'au moins un paramètre macroscopique, par exemple la masse du véhicule, le type de transmission, les dimensions des roues. Le modèle de transmission du véhicule relie la puissance du véhicule au régime et au couple du moteur, au moyen d'au moins un paramètre macroscopique, par exemple le type de transmission, la puissance maximale et le régime moteur associé.

Le modèle de dynamique du véhicule prend en compte la dynamique du véhicule. Il peut être construit à partir de l'application du principe fondamental de la dynamique du véhicule appliqué sur son axe longitudinal, et peut s'écrire sous la forme suivante :

**[Math 3]**

$$m\frac{dv}{dt} = F_T - F_{res} - F_{slope} - F_{brk}$$

avec :

m : masse du véhicule
t : temps
v est la vitesse du véhicule, issue du profil de vitesse.

$F_{res}$ est la résultante des efforts de frottement subis par le véhicule et peut être exprimée en fonction de la vitesse sous la forme

**[Math 4]**

$$F_{res} = a + bv + cv^2$$

avec a, b, c des paramètres du véhicule à identifier en fonction des caractéristiques générales du véhicule (paramètres macroscopiques du véhicule).

$F_T$ Effort de traction du véhicule à la roue
$F_{brk}$ Force de freinage mécanique
$F_{slope}$ peut être exprimée en fonction de la masse du véhicule et du profil de pente de la route :

**[Math 5]**

$$F_{slope} = mg \sin(b)$$

L'angle d'inclinaison b est une donnée d'entrée du modèle de la dynamique du véhicule. En effet, l'inclinaison b peut être calculée à partir de l'altitude et de la distance parcourue, elle dépend donc du profil de pente.
Ces équations permettent d'écrire une formule qui relie la puissance estimée Pe du moteur à la vitesse du véhicule et d'autres paramètres macroscopiques connus ou déterminables. En effet, on peut écrire l'équation :

**[Math 6]**

$$Pe = F_T * v/\eta_{trans}$$

Avec

$\eta_{trans}$ Rendement de la transmission
v : Vitesse du véhicule

Ainsi, en combinant les différentes équations, il est possible de déterminer une formule qui relie la puissance du moteur au profil de vitesse et éventuellement au profil de pente, au moyen de paramètres macroscopiques connus et constants.
Le modèle de transmission estime le rapport de réduction entre le régime de rotation du moteur thermique et la vitesse du véhicule. Il peut être paramétré en fonction des caractéristiques générales (paramètres macroscopiques) du véhicule, notamment la masse du véhicule, la puissance maximale, le type de transmission, en particulier le nombre de rapports. Ce modèle de transmission utilise seulement la vitesse du véhicule en tant que donnée d'entrée, pour estimer le rapport de réduction :

**[Math 7]**

$$R_{MTH-v} = f(v)$$

La fonction f peut être obtenue notamment à partir d'abaques données par le constructeur. $R_{MTH-v}$ est le rapport de réduction entre le régime de rotation du moteur et la vitesse du véhicule.
Ce rapport de réduction peut ensuite être utilisé pour déterminer le régime du moteur Ne. En effet, on peut écrire les relations suivantes :

**[Math 8]**

$$Ne = R_{MTH-v} * v$$

Ensuite, le couple du moteur Cme peut être déterminé en fonction de la puissance (estimée à l'aide du modèle de dynamique du véhicule) et du régime du moteur :

**[Math 9]**

$$Cme = f2(Ne, Pe)$$

La fonction f2 peut être obtenue par des cartographies données par le constructeur.

Modèle du moteur

Le modèle du moteur relie le régime et le couple du moteur aux émissions de polluants et/ou sonores en sortie du moteur (c'est-à-dire avant le système de post-traitement), au moyen d'au moins un paramètre macroscopique. Selon une mise en œuvre de l'invention, pour construire le modèle du moteur on peut utiliser au moins un des paramètres macroscopiques suivants : la cylindrée, le type de motorisation, le couple et la puissance, l'architecture de la boucle d'air, la norme d'homologation du véhicule, etc.

Selon un mode de réalisation de l'invention, on peut construire le modèle du moteur par association d'un modèle énergétique et d'un modèle de polluants et/ou de bruit en sortie du moteur. Le modèle énergétique relie le couple et le régime du moteur à des débits et des températures de fluides mis en œuvre dans le moteur à combustion (carburants, gaz à l'admission, gaz à l'échappement, éventuellement recirculation des gaz brûlés) au moyen d'au moins un paramètre macroscopique, par exemple la cylindrée, le type de motorisation, le couple et la puissance maximaux, l'architecture de la boucle d'air. Le modèle de polluants et/ou de niveau de bruit en sortie moteur relie des débits et des températures de fluides mis en œuvre dans le moteur à combustion interne aux émissions de polluants et/ou sonores en sortie du moteur, au moyen d'au moins un paramètre macroscopique, par exemple la norme d'homologation du véhicule, le type de motorisation, l'architecture de la boucle d'air.

Le modèle énergétique permet d'estimer les grandeurs physiques sur le point de fonctionnement courant (régime, couple). Il est paramétré en fonction de paramètres macroscopiques. Les grandeurs physiques estimées sont les débits et températures des fluides mis en œuvre dans le moteur à combustion (carburants, gaz à l'admission, gaz à l'échappement, éventuellement recirculation des gaz brûlés).

Le modèle de polluants et/ou de niveau de bruit en sortie du moteur permet à partir de l'information du régime et du couple du moteur, et des estimations issues du modèle énergétique, d'estimer les émissions polluantes et/ou sonores en sortie du moteur. Il peut être paramétré en fonction des caractéristiques générales du véhicule et du moteur : la norme d'homologation du véhicule, le type de motorisation, l'architecture de la boucle d'air, etc.

Par exemple, l'estimation des polluants en sortie moteur peut se faire en deux étapes :

- estimation des émissions en quasi-statique au moyen d'un modèle quasi-statique, et
- estimation de l'impact des phénomènes transitoires au moyen d'un modèle transitoire.

Alternativement, l'estimation des polluants en sortie moteur peut se faire uniquement en une seule étape au moyen du modèle quasi-statique.

Estimer les émissions en quasi-statique d'un moteur sur un point de fonctionnement à un instant donné revient à considérer que ce moteur est en fonctionnement stabilisé sur ce point de fonctionnement.

L'estimation de l'impact des phénomènes transitoires (fonctionnement non stabilisé) permet de prendre en compte les phénomènes transitoires, qui engendrent généralement un surplus d'émissions polluantes.

Les modèles quasi-statiques de polluants peuvent être paramétrés au moyen de paramètres macroscopiques du véhicule et du moteur. Ils permettent à chaque instant d'estimer les émissions polluantes quasi-statiques en sortie moteur, à partir des estimations de régime et de couple du moteur et des sorties du modèle énergétique. Les modèles quasi-statiques peuvent s'écrire sous la forme :

**[Math 10]**

$$PSME_{i-QS} = f3(Ne, Cme)$$

$PSME_{i-QS}$ Emissions du polluant i en sortie du moteur pour un régime quasi-statique La fonction f3 peut être de différent type, en fonction du type de polluant étudié.

Par exemple, le modèle quasi-statique de NOx peut être issu des travaux de Gartner, (U. Gartner, G. Hohenberg, H. Daudel and H. Oelschlegel, Development and Application of a Semi-Empirical NOx Model to Various HD Diesel Engines), et peut s'écrire sous la forme :

**[Math 11]**

$$\log(NOx_{QS}) = a_0 + a_1 * COC + a_2 * m_{cyl} + a_3 * m_{O2}$$

Les coefficients $a_0$, $a_1$, $a_2$, $a_3$ sont obtenus à partir de données expérimentales. $NOx_{QS}$ est la masse de NOx par unité de masse de carburant ; $m_{cyl}$ la masse d'air enfermée dans le cylindre par cycle ; $m_{O2}$ la masse d'oxygène enfermée dans le cylindre par cycle.

Un des avantages de ce modèle est que ces coefficients varient peu d'un moteur à l'autre. Ce point est démontré dans l'article de Gartner précité.

Les particules en sortie du moteur est la combinaison de deux phénomènes : la formation et la post-oxydation dans la chambre de combustion. Ces phénomènes sont au premier ordre influencés par la richesse, le régime, la quantité de carburant, et le taux de gaz brûlés.

Des modèles similaires peuvent être construits pour les autres polluants.

Lorsqu'on détermine l'impact des phénomènes transitoires, on peut mettre en œuvre en outre les moyens décrits ci-dessous. Les phénomènes de dynamique de boucle d'air génèrent un écart sur les taux de BGR (fraction de gaz brûlés, liée à la recirculation des gaz d'échappement) et la richesse par rapport au point de fonctionnement stabilisé, ce qui a un impact fort sur les polluants, en particuliers les hydrocarbures HC, le monoxyde de carbone CO et particules. Les modèles d'impact du transitoire sont paramétrés en fonction de paramètres macroscopiques du moteur, en particulier des caractéristiques de la boucle d'air récupérées (atmosphérique/suralimentée, recirculation des gaz brûlés haute pression $EGR_{HP}$ / recirculation des gaz brûlés basse pression $EGR_{BP}$).

Ces modèles permettent d'estimer les fractions de gaz brulés dynamiques $BGR_{dyn}$ et richesses dynamiques $AF_{ratio-dyn}$ à partir des estimations quasi-statiques et de la variation du couple estimé :

**[Math 12]**

$$BGR_{dyn} = f(BGR, Cme, dCme/dt)$$

**[Math 13]**

$$AF_{ratio-dyn} = f(AF_{ratio}, Cme, dCme/dt)$$

Un coefficient de correction $Cor_{i-QS2TR}$ pour chaque polluant peut être calculé en fonction de ces grandeurs dynamiques :

**[Math 14]**

$$Cor_{i-QS2TR} = f(BGR_{dyn}, BGR, AF_{ratio-dyn}, AF_{ratio})$$

Ces coefficients de correction permettent d'estimer les émissions polluantes en sortie moteur en prenant compte les phénomènes transitoires. Pour cela, les émissions de polluants en sortie du moteur peuvent s'écrire par une formule du type :

**[Math 15]**

$$PSME_i = Cor_{i-QS2TR} * PSME_{i-QS}$$

$PSME_i$ représente les émissions du polluant i en sortie du moteur.

Modèle du post-traitement

Le modèle du post-traitement relie les émissions de polluants et/ou sonores en sortie du moteur (c'est-à-dire avant le système de post-traitement) aux émissions de polluants et/ou sonores en sortie du système de post-traitement, au moyen d'au moins un paramètre macroscopique. Selon une mise en œuvre de l'invention, pour construire le modèle du moteur on peut utiliser au moins un des paramètres macroscopiques suivants : la cylindrée, la norme d'homologation du véhicule, etc.

Le modèle de post-traitement peut comprendre des sous-modèles pour chaque technologie de dépollution et/ou des sous-modèles de réduction du bruit, qui sont associés en fonction de l'architecture du système de dépollution ou de réduction du bruit du véhicule. Ces sous-modèles peuvent être paramétrés en fonction de paramètres macroscopiques du véhicule tels que la norme d'homologation, la cylindrée, etc. Par exemple, pour la dépollution, les différentes technologies de dépollution peuvent être :

- TWC, de l'anglais « Three-way catalytic converters » signifiant catalyseur trois voies,
- GPF (pour moteur essence), de l'anglais « gasoline particle filter » signifiant filtre à particules pour essence,
- DOC (pour moteur diesel), de l'anglais « Diesel oxidation catalyst », signifiant catalyseur à oxydation pour Diesel,
- DPF (pour moteur diesel), de l'anglais « Diesel particle filter », signifiant filtre à particules pour Diesel,
- LNT (pour moteur Diesel), de l'anglais « lean Nox trap », signifiant piège à Nox,
- SCR (pour moteur Diesel), de l'anglais « Selective catalytic reduction », signifiant réduction catalytique sélective.

Le modèle de post-traitement permet d'estimer les émissions de polluants ou sonores en sortie du système de post-traitement à partir des estimations de température, débits, et émissions polluantes en sortie du moteur. Le modèle de post-traitement peut être construit en discrétisant le système de post-traitement en plusieurs tranches (ou couches), et par association de l'efficacité $Conv_{i,j}$ de chaque tranche discrétisée. Selon un exemple, le modèle de post-traitement pour les émissions de polluants peut s'écrire :

**[Math 16]**

$$PSEE_i = \prod_{j=1}^{Nb\,pain} Conv_{i,j}(T_{éch}, Q_{éch}) * PSME_i$$

$PSEE_i$ représente les émissions du polluant i en sortie du système de post-traitement ; $Conv_{i,j}$ l'efficacité de conversion de la tranche j du système de post-traitement pour le polluant i ; Téch la température des gaz d'échappement ; Qéch le débit des gaz d'échappement

L'efficacité des tranches du système de post-traitement peut être déterminée à partir de cartographies du constructeur.

*Détermination des risques en termes de sécurité routière pour chaque véhicule prédéterminé.*

Les risques de sécurité routière tendent à définir la dangerosité d'une partie de portion de réseau routier.

Ces risques de sécurité routière peuvent notamment être déterminés en fonction de l'adhérence à la route.

L'adhérence à la route peut notamment être caractérisée en fonction du profil de pente et/ou du profil de vitesse, des parties de portion de route, des véhicules prédéterminés et des vitesses, accélérations et décélérations sur la partie de portion de route. L'adhérence peut également dépendre des courbes de la route.

Pour déterminer la dangerosité d'une partie de portion de réseau routier, le paramètre de sécurité routière en sortie de l'étape b) peut être déterminé en mettant en œuvre les étapes suivantes : on construit un modèle de déplacement de chaque véhicule prédéterminé considéré du parc prédéfini ; puis on détermine un paramètre de glissement pour chaque véhicule prédéterminé ; puis on détermine un paramètre de sécurité routière (qui correspond à une caractéristique physique en sortie de l'étape b)) pour chaque véhicule prédéterminé.

Construction du modèle de déplacement du véhicule

On appelle modèle de déplacement du véhicule prédéterminé, un modèle qui relie au moins un paramètre de glissement (des pneumatiques du véhicule) à la position et/ou l'altitude du véhicule du profil de pente.

Par profil de pente (obtenu à l'étape a)), on entend une courbe représentative de la variation ou de la dérivée spatiale de l'altitude de la portion de réseau routier en fonction des positions (latitude et longitude par exemple) de la portion de réseau routier.

Le modèle prend en compte la dynamique de déplacement du véhicule (vitesse, accélération...) pour déterminer le glissement du véhicule, c'est-à-dire un mouvement non désiré et non contrôlé du véhicule.

Le modèle de déplacement du véhicule prédéterminé peut prendre en compte au moins une, de préférence toutes, des conditions suivantes : l'état de la chaussée, les conditions météorologiques, la pression et l'état d'usure des pneumatiques du véhicule prédéterminé, notamment au moyen d'une cartographie. Cette cartographie peut relier notamment le paramètre de glissement au coefficient d'adhérence des pneumatiques. Ainsi, le paramètre de sécurité routière est rendu plus représentatif de la dangerosité du véhicule prédéterminé sur la partie de portion de réseau routier.

Un paramètre de glissement des pneumatiques du véhicule peut être l'angle de glissement latéral du véhicule prédéterminé, noté $\beta$. L'angle de glissement latéral correspond à l'angle formé entre le vecteur vitesse du véhicule et l'axe longitudinal du véhicule.

Un autre paramètre de glissement des pneumatiques du véhicule peut être le taux de glissement longitudinal, noté SR. Le taux de glissement longitudinal traduit le glissement du pneumatique de la roue par rapport au sol. Ce taux de glissement dépend notamment du coefficient d'adhérence du pneumatique sur le sol.

Selon un mode de réalisation, on suppose que les roues restent au contact d'un sol plat. De plus, on suppose que les suspensions sont rigides, ce qui revient à négliger le roulis et le tangage.

Par exemple, on peut déterminer l'angle de glissement latéral $\beta$ à chaque instant par une formule du type :

**[Math 17]**

$$\beta(i) = \frac{v_{fy}(i) + v_{ry}(i)}{2 * v_L(i)}$$

avec :

i : l'instant du calcul,

$v_{fy}$ : la projection sur l'axe y de la vitesse de la roue avant,

$v_{ry}$ : la projection sur l'axe y de la vitesse de la roue arrière, et

$v_L$ : la projection sur l'axe longitudinal du véhicule de la vitesse du véhicule, les projections des vitesses étant fonction de ladite position du véhicule.

Pour déterminer l'angle de glissement latéral $\beta$, on peut réaliser la suite d'étapes suivantes :
*Calcul de l'angle de braquage des roues avant $\alpha$*
Dans cette section, le calcul de l'angle de braquage des roues avant $\alpha$ est détaillé.

Le calcul de l'angle de lacet $\psi$, à partir des coordonnées (position), peut être obtenu, à chaque instant i, à partir de l'équation suivante :

**[Math 18]**

$$\psi(i) = \frac{180}{\pi} * \tan^{-1}\left(\frac{x_{GPS}(i) - x_{GPS}(i-1)}{y_{GPS}(i) - y_{GPS}(i-1)}\right)$$

Avec $(x_{GPS}, y_{GPS})$ : positions de la portion de réseau routier issues du profil de vitesse et/ou du profil de pente.
La vitesse angulaire $\omega$ du véhicule peut être donnée, à chaque instant i, par une formule du type :

**[Math 19]**

$$\omega(i) = \frac{\psi(i) - \psi(i-1)}{T_e}$$

**Avec** $T_e$, la fréquence d'échantillonnage

Les projections $v_x$ et $v_y$ de la vitesse $v$ du véhicule prédéterminé dans le référentiel (x,y) peuvent être données par :

**[Math 20]**

$$v_x(i) = \frac{x_{GPS}(i) - x_{GPS}(i-1)}{T_e}$$

**[Math 21]**

$$v_y(i) = \frac{y_{GPS}(i) - y_{GPS}(i-1)}{T_e}$$

Les projections $v_L$ et $v_T$ de la vitesse $v$ dans le référentiel du châssis du véhicule peuvent être données par :

**[Math 22]**

$$v_L(i) = v_x(i) * \cos \psi(i) + v_y(i) * \sin \psi(i)$$

**[Math 23]**

$$v_T(i) = -v_x(i) * \sin \psi(i) + v_y(i) * \cos \psi(i)$$

L'angle de braquage peut alors être calculé :

**[Math 24]**

$$\alpha(i) = \tan^{-1}\left(\frac{\omega(i) * (l_r + l_f)}{v_L(i)}\right)$$

$l_r$ étant la distance entre le centre de gravité et l'essieu roue arrière

Et $l_f$ étant la distance entre le centre de gravité et l'essieu roue avant.

*Calcul de l'angle de glissement $\beta$*

Dans cette section, le calcul de l'angle de glissement latéral $\beta$ est détaillé. La méthode choisie consiste à prendre la moyenne l'angle de glissement latéral des roues avant et arrière de chaque véhicule prédéterminé.

Pour ce faire, on calcule les projections $v_{fy}$ et $v_{ry}$ sur l'axe y des vitesses des roues avant et arrière $v_f$ et $v_r$ respectivement :

**[Math 25]**

$$v_{fy}(i) = (v_T(i) + l_f * \omega(i)) * \cos \alpha(i) - v_L(i) * \sin \alpha(i)$$

**[Math 26]**

$$v_{ry}(i) = v_T(i) - l_r * \omega(i)$$

On en déduit β par une équation de la forme :

**[Math 27]**

$$\beta(i) = \frac{v_{fy}(i) + v_{ry}(i)}{2 * v_L(i)}$$

Ainsi, en combinant les équations, on obtient un modèle de déplacement de chaque véhicule prédéterminé qui relie l'angle de glissement latéral $\beta$ à la position du véhicule prédéterminé sur la portion du réseau routier.

Le paramètre de glissement peut aussi comprendre le taux de glissement longitudinal SR, déterminé par le modèle de déplacement du véhicule et par une cartographie fonction du coefficient d'adhérence $\mu$ du véhicule et de conditions météorologiques (état de la route).

Pour caractériser le coefficient d'adhérence $\mu$, on peut mettre en œuvre les étapes suivantes :

*Calcul de l'angle de la pente $\theta$*

Dans cette section, le calcul de l'angle de la pente θ est détaillé.

La distance parcourue Δd à chaque instant i est donnée par :

**[Math 28]**

$$\Delta d(i) = \sqrt{[x_{GPS}(i) - x_{GPS}(i-1)]^2 + [y_{GPS}(i) - y_{GPS}(i-1)]^2}$$

La variation d'altitude Δh à chaque instant i peut se calculer simplement via l'altitude issue des mesures :

**[Math 29]**

$$\Delta h(i) = alt_{GPS}(i) - alt_{GPS}(i-1)$$

$alt_{GPS}$ étant l'altitude à chaque position du profil de pente.

En conséquence, la pente Slope instantanée peut s'obtenir par :

**[Math 30]**

$$\text{Slope(i)} = \frac{\Delta h(i)}{\Delta d(i)}$$

L'angle de la pente θ peut être déterminé, à chaque instant i, par une équation de la forme :

**[Math 31]**

$$\theta(\text{i}) = \tan^{-1}(Slope)$$

*Calcul du coefficient d'adhérence $\mu$*

Pour calculer le coefficient d'adhérence $\mu$, on calcule la force de traction au niveau du contact sol roue $F_{driving}$ et la force de gravité normale $F_z$ :

**[Math 32]**

$$F_z(i) = M_{vehicle} * g * \cos(\theta(i))$$

$M_{vehicle}$ étant la masse du véhicule et g l'accélération de la pesanteur.

**[Math 33]**

$$F_{driving}(i) = M_{vehicle} * a_{veh}(i) + M_{vehicle} * g * \sin(\theta(i)) + F_{res}(v(i))$$

Avec $a_{veh}$ l'accélération instantanée du véhicule, et $F_{res}$ la résultante des forces de frottements qui s'appliquent sur le véhicule, cette résultante étant donnée par la relation suivante appelée « loi de route ». Ce terme s'exprime directement en fonction de la vitesse et des caractéristiques du véhicule

**[Math 34]**

$$F_{res}(v) = C_{RR} + k * v + \frac{1}{2} * \rho_{air} * S * C_x * v^2$$

Avec

$\rho_{air}$: la masse volumique de l'air,
S : la surface frontale du véhicule,
$C_x$ : le coefficient de trainée aérodynamique frontal du véhicule,
k : le coefficient de frottement visqueux ,
$C_{RR}$ : le coefficient de résistance au roulement du véhicule, et

L'accélération instantanée du véhicule $a_{veh}$ peut être obtenue à partir de la vitesse véhicule du profil de vitesse. Par exemple, elle peut être estimée à partir d'une équation de la forme :

**[Math 35]**

$$a_{veh} = \frac{v(i) - v(i-1)}{T_e}$$

On peut en déduire le coefficient d'adhérence μ par une équation du type :

**[Math 36]**

$$\mu(i) = \frac{F_{driving}(i)}{F_z(i)}$$

Ainsi, en combinant les équations, on obtient un modèle de déplacement du véhicule qui relie le coefficient d'adhérence à la position et à l'altitude du véhicule du profil de pente, puis au moyen d'une cartographie on en déduit le taux de glissement longitudinal SR.
Le procédé selon l'invention n'est pas limité au modèle de déplacement ici décrit ci-dessous, d'autres modèles peuvent être mis en œuvre, notamment des modèles prenant en compte la largeur du véhicule.

Détermination d'un paramètre de glissement

On peut déterminer au moins un paramètre de glissement du véhicule au moyen du modèle de déplacement construit précédemment et au moyen des profils de vitesse et de pente de l'étape a) du procédé de l'invention, le paramètre de glissement pouvant comprendre l'angle de glissement latéral $\beta$ et/ou le taux de glissement longitudinal SR.

A partir de l'angle de glissement latéral $\beta$ déterminé, on caractérise le glissement des pneumatiques par une cartographie dépendant de deux paramètres : le coefficient d'adhérence $\mu$ et l'angle de glissement déterminé $\beta$. Cette cartographie peut dépendre de l'état de la chaussée, en particulier elle est très différente si la route est sèche ou humide (ce qui peut être estimé à partir de la météo), et de l'état des pneus : de leur pression et de leur usure.

Détermination d'un indicateur de dangerosité de conduite

Il s'agit de déterminer au moins un paramètre de sécurité routière à partir du ou des paramètres de glissement déterminés à l'étape précédente. Le paramètre de sécurité routière peut prendre la forme d'une valeur, d'une note...

Le paramètre de sécurité routière peut être déterminé en mettant en œuvre les étapes suivantes :

- on choisit au moins un seuil (au moins un seuil par paramètre) de conduite dangereuse pour le(s) paramètre(s) de glissement ou leurs dérivés ;
- on détermine si le(s) paramètre(s) de glissement ou leur dérivés dépasse(nt) le seuil choisi ;
- on quantifie le nombre de fois et/ou la fréquence (temporelle ou kilométrique) pour lesquels le(s) paramètre(s) de glissement ou leur dérivés ont dépassé le seuil choisi ; et
- on déduit du nombre et/ou de la fréquence, le paramètre de sécurité routière.

En effet, la comparaison des paramètres de glissement (ou leurs dérivés) avec des seuils permet de déterminer si le conducteur se trouve souvent dans des conditions limites d'adhérence, pour lesquels les risques de sécurité routière augmente.

Le paramètre de sécurité routière peut consister au nombre ou à la fréquence de dépassement de seuil. Alternativement l'indicateur peut être une valeur moyenne ou une note (par exemple sur 10) représentative des différents nombres et/ou fréquences calculés pour chaque paramètre de glissement.

D'autres méthodes de détermination de risques de sécurité routière pourraient être utilisées. Ces méthodes pourraient notamment prendre en compte le modèle du moteur déjà défini, le système de transmission aux roues du système, et/ou le système de freinage avec une éventuelle correction par un moyen de post-traitement (type ABS par exemple). Ainsi, on peut par exemple ajouter un modèle du véhicule, un modèle du système de transmission, un modèle du système de freinage et éventuellement un modèle de post-traitement.

L'invention concerne aussi un produit programme d'ordinateur téléchargeable depuis un réseau de communication et/ou enregistré sur un support lisible par ordinateur et/ou exécutable par un processeur ou un serveur, comprenant des instructions de code de programme pour la mise en œuvre du procédé selon l'une des caractéristiques précédentes, lorsque ledit programme est exécuté sur un ordinateur, un téléphone portable ou un appareil informatique. De ce fait, l'utilisation du procédé est simple et rapide.

L'invention concerne également l'utilisation du procédé selon l'une des caractéristiques précédentes pour modifier l'infrastructure routière, étendre le réseau des transports en commun et/ou modifier les mesures de contrôle du trafic routier. En effet, le procédé est particulièrement adapté pour comparer les solutions techniques envisageables et ainsi trouver un compromis optimal vis-à-vis des émissions polluantes, sonores et/ou des risques de sécurité routière. De plus, le procédé évite des coûts de réalisation de travaux et d'analyses a posteriori après réalisation des travaux pour évaluer l'impact des modifications. Il permet d'anticiper l'impact de tels changements.

Pour se faire, l'utilisation du procédé peut notamment comprendre les étapes suivantes :

- on réalise les étapes du procédé tel que décrit précédemment pour la portion de réseau routier existante pour déterminer les paramètres physiques représentatifs des émissions polluantes et/ou sonores et/ou des risques de sécurité routière ;
- on réalise les étapes du procédé tel que décrit précédemment avec au moins une modification d'infrastructure ou d'aménagement (ajout d'un feu à une position donnée, ajout d'un rond-point, limitation ou augmentation du nombre de voies de la portion de réseau routier, par exemple pour ajouter une voie de bus ou de tramway, modification de la vitesse maximale sur la portion du réseau routier) pour déterminer, pour chaque configuration (c'est-à-dire chaque modification d'infrastructure ou d'aménagement et pour la portion de réseau routier initiale existante) les paramètres physiques représentatifs des émissions polluantes et/ou sonores et/ou des risques de sécurité routière ;

- on détermine la configuration optimale (par exemples, la configuration qui permet de réduire au maximum les émissions polluantes ou celle qui permet de réduire le bruit au maximum) ;
- on réalise des travaux sur la portion de réseau routier pour la mise en place physique de la configuration optimale (par exemples, réalisation du rond-point, ajout ou suppression d'un feu, ajout ou suppression de voies de circulation, ajout de panneaux de limitation de la vitesse).

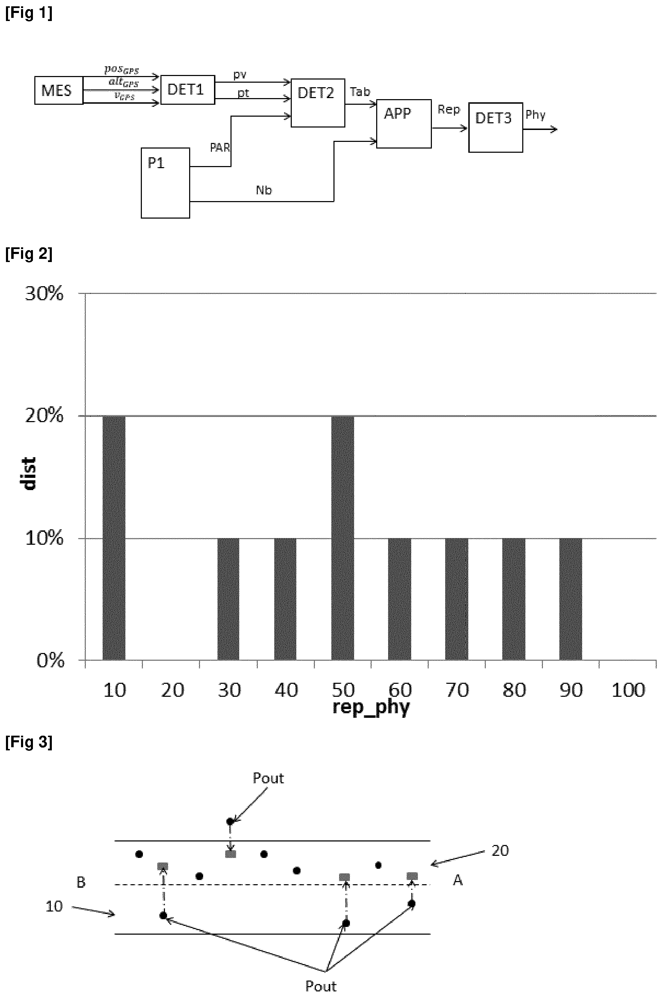

La figure 1 illustre, de manière schématique et non limitative, un mode de réalisation du procédé selon l'invention.

Dans ce procédé, on réalise les étapes suivantes, de préférence successivement :

a) On mesure MES les positions $pos_{GPS}$, vitesses $V_{GPS}$ et altitudes $alt_{GPS}$ par un moyen de mesure par exemple des GPS embarqués sur des véhicules circulant sur la portion de réseau routier. Ces mesures peuvent aussi être enregistrées dans un FCD.

On détermine DET 1 un profil de vitesse pv et un profil de pente pt sur la portion de réseau routier à partir de ces mesures. Les mesures des positions $pos_{GPS}$, vitesses $V_{GPS}$ et altitudes $alt_{GPS}$ sont réalisés sur plusieurs trajets de véhicules traversant la portion de réseau routier, de préférence au moins cent trajets pour avoir des données suffisantes pour déterminer, de manière précise et fiable, le profil de vitesse pv et le profil de pente pt. En effet, si l'on dispose de moins de trajets, l'ensemble du procédé reste réalisable mais le paramètre de confiance sera de moins bonne qualité. En effet, avec un faible nombre de trajets, entre 2 et 10 par exemple, la fiabilité du profil de vitesse déterminée pourrait être moins bonne, ce qui se caractérise par un moins bon paramètre de confiance. En revanche, à partir de cent trajets enregistrés, le profil de vitesse est fiable et le paramètre de confiance est amélioré. Les véhicules servant aux mesures des positions $pos_{GPS}$, vitesses $V_{GPS}$ et altitudes $alt_{GPS}$ sont de préférence de différents types et ne sont pas nécessairement les véhicules prédéterminés du parc prédéfini. En d'autres termes, les véhicules utilisés pour ces mesures peuvent être n'importe quel véhicule à moteur et il est préférable que les mesures soient réalisées à partir de différents types de véhicules, l'inertie et la vitesse pouvant par exemple influer sur les accélérations/décélération, pour avoir un profil de vitesse pv et un profil de pente pt représentatif. Le profil de vitesse ainsi obtenu est suffisant pour déterminer avec précision les émissions polluantes, sonores et les risques de sécurité routière ;

b) On détermine DET2 pour chaque véhicule d'un parc prédéfini P1, chacun de ces véhicules n'étant pas nécessairement lié aux véhicules ayant servi aux mesures de l'étape a), au moins une caractéristique physique représentative des émissions polluantes (quantité de NOx émise, quantité de $CO_2$ émise, quantité de particules PM2,5 par exemple), des émissions sonores (niveau de bruit) et/ou des risques en terme de sécurité routière (adhérence du véhicule à la route par exemple) sur au moins une partie de dite portion de réseau routier. Chaque caractéristique physique est déterminée en fonction des caractéristiques PAR des véhicules pris en compte du parc prédéfini P1, ainsi que du profil de vitesse pv et du profil de pente pt déterminés à l'étape a).

Le profil de vitesse pv et le profil de pente pt pris en compte pour ces calculs sont donc toujours les mêmes quel que soit le véhicule considéré pour les étapes suivantes. Bien que le profil de vitesse pv considéré soit déterminé pour les étapes suivantes (étapes b) à d)), il pourrait être intéressant de modifier le profil de vitesse pv, en modifiant la détermination du profil de vitesse à l'étape a). Par exemple, on pourrait ne considérer, pour déterminer le profil de vitesse pv, qu'un créneau horaire, un jour de la semaine particulier, par exemple le mardi entre 7h et 9h. On pourrait ainsi affiner les déterminations des émissions polluantes, sonores et/ou l'impact sur la sécurité routière et augmenter leurs précisions. Les différentes valeurs des caractéristiques physiques dépendent donc des caractéristiques PAR des véhicules. En sortie de l'étape b), on obtient donc une table Tab de caractéristiques physiques Tab, chaque caractéristique physique de la table Tab correspondant à un véhicule du parc prédéfini P1.

c) On applique APP le parc prédéfini P1 à la table Tab de caractéristiques physiques déterminées à l'étape précédente pour obtenir une répartition Rep des caractéristiques physiques sur le parc prédéfini P1. Pour se faire, on multiplie chacune des caractéristiques physiques de la table Tab par le nombre Nb (ou le pourcentage) de véhicules correspondant à cette valeur dans le parc prédéfini P1 ; On obtient ainsi une répartition Rep de la distribution des caractéristiques physiques en fonction des véhicules du parc prédéfini P1 et du nombre Nb (ou du pourcentage) de chacun de ces véhicules dans le parc prédéfini P1.

d) On détermine DET3 le paramètre physique Phy sur au moins la partie de ladite portion du réseau routier au moyen de la répartition Rep des caractéristiques physiques obtenue à l'étape c). Pour se faire, on agrège la répartition Rep des caractéristiques physiques obtenue à l'étape c). Par exemple, pour cette agrégation, le paramètre physique peut être pris égal à la valeur de la répartition Rep correspondant au soixantième centile de la répartition Rep. Par cette opération d'agrégation, on passe d'une pluralité de caractéristiques physiques dans la répartition Rep à une seule scalaire du paramètre physique Phy, ce pour chaque critère observé (émissions polluantes, sonores et/ou risques de sécurité routière. En d'autres termes, à l'issue de l'étape d), chaque partie de la portion de réseau routier est caractérisée par au moins une valeur scalaire dite paramètre physique. De préférence, chaque partie de la portion de réseau routier est caractérisée par plusieurs paramètres physiques, chacun étant une valeur scalaire, les paramètres physiques pouvant être par exemple la quantité de NOx émise, la quantité de $CO_2$ émise, la quantité de particules PM2,5 émise, le niveau de bruit émis, l'adhérence à la route.

Le procédé permet ainsi de déterminer des paramètres physiques de portion de réseau routier pour un parc de véhicules prédéfini P1.

La figure 2 représente, de manière schématique et non limitative, un exemple de répartition des caractéristiques physiques rep_phy en fonction de la distribution dist de chacune de ces caractéristiques physiques (par exemple le niveau de bruit émis en dB). La distribution dist est directement liée au nombre de véhicules de chaque type considéré (chaque véhicule prédéterminé) dans le parc. Ainsi, les caractéristiques physiques calculées peuvent correspondre à 10, 20, 30, 40, 50, 60, 70, 80 et 90. Les valeurs 10 et 50 correspondent à des véhicules, représentant chacun 20% du parc, chacune des valeurs 30, 40, 60, 70, 80, et 90 correspondent à des véhicules représentant chacune 10% du parc considéré. La valeur 20 n'est pas représentée. Ainsi, le soixantième centile va correspondre à la valeur 50 de la répartition rep_phy des caractéristiques physiques. En effet, les valeurs inférieures ou égales à 5 sont 10, 20, 30, 40 et 50, représentées respectivement par 20%, 0%, 10%, 10% et 20% des véhicules du parc. Ainsi, les valeurs inférieures ou égales à 50 représentent bien 60% du parc considéré. Ainsi, le paramètre physique qui est agrégé à l'étape d), en agrégeant au soixantième centile, est 50. Par exemple, on pourrait alors considérer que le niveau de bruit de la partie de portion de réseau routier est donc égal à 50 dB pour le parc de véhicules considéré.

La figure 3 illustre une agrégation spatiale. Sur cette figure, on observe une route 10 matérialisée par les deux traits noirs continus. Cette route est une route à deux voies, les deux voies étant séparées par la ligne représentée par le trait pointillé. Chacune des voies permet la circulation dans un sens. Autrement dit, l'une des voies permet la circulation de A vers B et l'autre de B vers A. La voie 20 permet la circulation de A vers B.

On a réalisé une mesure de position d'un trajet d'un véhicule circulant de A vers B à une fréquence d'acquisition de 1 Hz. Les points de mesure correspondent aux ronds noirs. On observe que certains de ces points Pout sont situés à l'extérieur de l'espace compris entre le trait noir continu supérieur et le trait en pointillé, délimitant la voie 20. Ces points Pout sont alors agrégés, c'est-à-dire corrigés pour être ramenés artificiellement dans l'espace de la voie 20 délimitée par le trait noir continu supérieur et le trait en pointillé. L'étape d'agrégation consiste ainsi à corriger les points mesurés pour les ramener dans l'espace considéré.

Les flèches en traits mixtes représentent les corrections réalisées sur chacun des points Pout et les rectangles gris représentent les points de mesures corrigés.

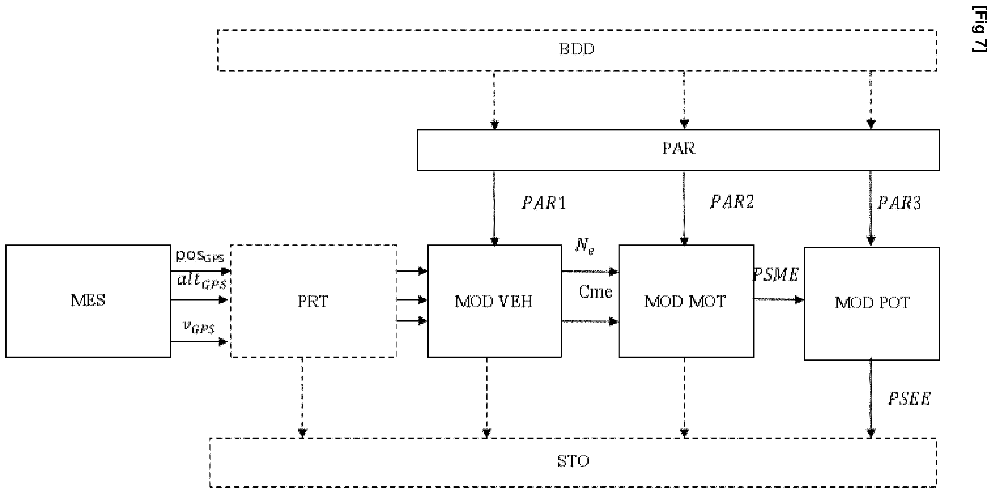

La figure 7 illustre, de manière schématique et non limitative, un mode de réalisation de l'étape b) du procédé de l'invention. Sur cette figure, les traits pointillés indiquent des éléments facultatifs du procédé.

Au préalable de cette étape b), les différents modèles (modèle du véhicule MOD VEH, modèle du moteur MOD MOT et modèle du post-traitement MOD POT) sont construits. Ces modèles sont construits à partir de paramètres macroscopiques PAR. De manière facultative, les paramètres macroscopiques PAR peuvent être obtenus depuis une base de données BDD, qui répertorie les différents véhicules en circulation. Par exemple, les paramètres macroscopiques PAR peuvent être obtenus en indiquant le numéro d'immatriculation des véhicules prédéterminés du parc prédéfini, la base de données BDD associant le numéro de plaque à la conception du véhicule (marque, modèle, motorisation...), et comprenant les paramètres macroscopiques des véhicules prédéterminés.

Une première série de paramètres macroscopiques PAR1 est utilisée pour la construction du modèle du véhicule MOD VEH. Cette première série de paramètres macroscopiques PAR1 peut comprendre les paramètres suivants : la masse du véhicule, la puissance maximale et le régime du moteur associé, la vitesse maximale, le type de transmission (liste non limitative). Chacun de ces paramètres dépendant de chaque véhicule prédéterminé.

Une deuxième série de paramètres macroscopiques PAR2 est utilisée pour la construction du modèle du moteur MOD MOT. Cette deuxième série de paramètres macroscopiques PAR2 peut comprendre les paramètres suivants : la cylindrée, le type de motorisation, le couple et la puissance maximums, l'architecture de la boucle d'air, la norme d'homologation du véhicule (liste non limitative). Chacun de ces paramètres dépendant de chaque véhicule prédéterminé.

Une troisième série de paramètres macroscopiques PAR3 est utilisée pour la construction du modèle du post-traitement MOD POT. Cette troisième série de paramètres macroscopiques PAR3 peut comprendre les paramètres suivants : la cylindrée, la norme d'homologation du véhicule (liste non limitative). Chacun de ces paramètres dépendant de chaque véhicule prédéterminé.

A partir du profil de vitesse pv et du profil de pente pt déterminés à l'étape a) du procédé, on détermine le couple et du régime moteur à partir du modèle du véhicule MOD VEH, qui détermine le couple Cme et le régime Ne du moteur, en fonction du profil de vitesse et de préférence en fonction du profil de pente. Chaque véhicule prédéterminé a un modèle de véhicule MOD VEH spécifique.

On peut ensuite déterminer les émissions polluantes et/ou sonores en sortie du moteur, au moyen du modèle du moteur MOD MOT, qui détermine les émissions de polluants et/ou sonores en sortie du moteur PSME, en fonction du couple Cme et du régime Ne du moteur. Le moteur considéré dépend de chaque véhicule prédéterminé.

Puis, on peut déterminer des émissions de polluants et/ou sonores du véhicule, c'est-à-dire en sortie du système de post-traitement au moyen du modèle de post-traitement MOD POT, qui détermine les émissions de polluants et/ou sonores en sortie du système de post-traitement PSEE, en fonction des émissions de polluants et/ou sonores en sortie du moteur PSME. La détermination des émissions de polluants et/ou sonores peut être réalisée à chaque instant, par exemple à une fréquence de 1Hz. Le système de post-traitement considéré dépend de chaque véhicule prédéterminé.

On peut éventuellement ensuite stocker tout ou partie de ces données. Une fois que les émissions de polluants et/ou sonores des véhicules prédéterminés PSEE sont caractérisées, celles-ci peuvent être stockées STO (enregistrées), en particulier dans une base de données (différente de la base de données qui comportent les paramètres macroscopiques). Ce stockage STO peut concerner uniquement les émissions de polluants et/ou sonores des véhicules prédéterminés PSEE, mais peut aussi concerner les données intermédiaires : le couple Cme et le régime Ne du moteur et/ou les émissions de polluants et/ou sonores en sortie du moteur PSME. Ces informations permettent un suivi des usages réels et des émissions associées avec une bonne résolution spatiale et temporelle. Ces informations peuvent par exemple permettre d'évaluer la pertinence environnementale des infrastructures routières à l'échelle d'une rue, identifier des pics d'émissions localisés, identifier l'impact du style de la conduite sur les émissions, etc.

## Exemples

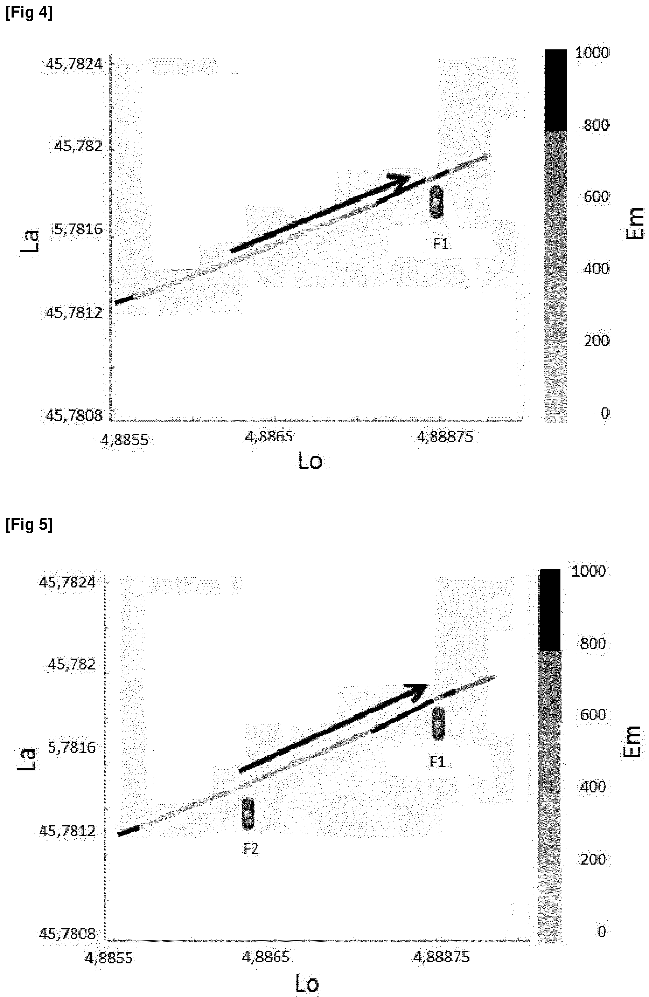

Les figures 4 à 6 comparent des exemples de détermination d'émissions polluantes (quantité émise de NOx) sur la même portion de réseau routier de la métropole de Lyon, la portion de réseau routier s'étendant sur environ 150 m.

Les figures 4 et 5 montrent la différence avant et après l'ajout d'un feu de signalisation sur la portion de réseau routier considérée. Elles représentent des cartographies des émissions polluantes Em sur une carte routière définie par la longitude Lo en degré sur l'axe des abscisses et la latitude La en degrés sur l'axe des ordonnées. Les émissions de polluants sont répertoriées par un niveau de gris entre 0 et 1000 mg/km de route.

La figure 4 représente les émissions de NOx déterminés par le procédé de la figure 1 selon l'invention avant l'ajout du feu de signalisation. La portion de réseau routier comporte un premier feu de signalisation F1, avant l'ajout du deuxième feu de signalisation.

La figure 5 représente les émissions de NOx déterminés par le procédé de la figure 1 selon l'invention après l'ajout du feu de signalisation F2, le feu F2 est situé à environ 100m en amont du feu F1. La figure 5 comporte donc deux feux de signalisation, F1 déjà présent initialement avant la modification (identique à celui de la figure 4) et F2 qui a été ajouté.

Les profils de vitesses et les pentes pour déterminer les émissions polluantes des cartographies représentées sur les figures 4 et 5 ont été déterminés grâce aux mesures de positions, vitesses et altitudes collectées par l'application Geco air™ (FCD à 1Hz).

Dans le cadre de ces exemples de l'invention, l'installation du feu de signalisation est positionnée sur un carrefour situé sur l'avenue Roger Salengro à Villeurbanne à l'intersection avec rue de Longchamp. Le feu F2 est positionné sur la figure 5.

L'ajout de ce feu de signalisation avait pour objectif de ralentir la vitesse de circulation et de rendre le quartier plus calme et plus sûr pour les passants et les riverains.

Mais comme on peut le voir sur la figure 5, par comparaison à la figure 4, en amont (dans le sens de la flèche noire de circulation) du feu de signalisation ajouté F2, la présence du feu F2 fait augmenter le taux de NOx émis, d'environ 25%. Cela est principalement dû à la phase d'arrêt au feu F2, et donc aux phases d'accélération et de décélération imposées par le feu F2.

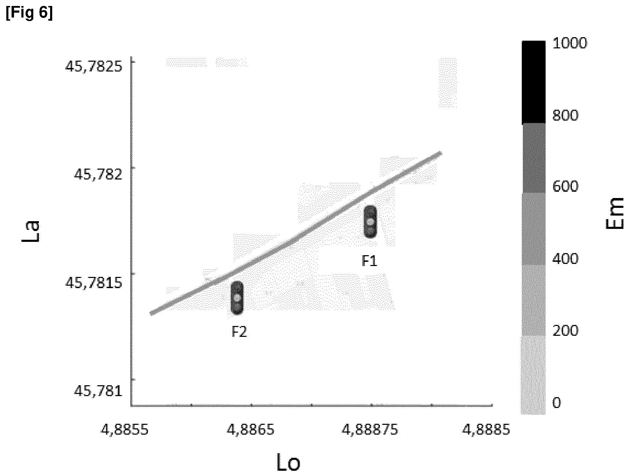

La figure 6 représente un exemple de détermination des émissions polluantes de la même portion du réseau routier que sur les figures 4 et 5, conformément à la méthode COPERT de l'art antérieur. Cette méthode est basée sur la vitesse moyenne sur de longues parties du réseau routier (au moins 1 km). Ainsi, la présence ou non des feux de signalisation F1 et/ou F2 est sans impact sur cette méthode. Cela signifie que la figure 6 correspond aussi bien à l'application de la méthode COPERT avec un seul feu (le feu F1 de la figure 4), qu'à l'application de la méthode COPERT avec deux feux (les feux F1 et F2 de la figure 5) et même qu'à une variante sans feux de signalisation. Selon la méthode COPERT, il n'y aurait donc aucune différence entre ces différentes situations, la méthode ne permettant pas de discrétiser les portions de réseaux routiers, par exemple le feu F1 et le feu F2.

Cette méthode ne permet donc pas de visualiser précisément l'impact local des émissions polluantes, ni de déterminer précisément dans l'espace les émissions polluantes. Au contraire, les figures 4 et 5 permettent des discrétisations locales des émissions polluantes, ce qui permet de déterminer finement la position des zones les plus polluées et d'évaluer l'impact en termes de pollution de nouvelles infrastructures ou de nouvelles règlementations sur une partie de réseau routier.

## Revendications

**1.** Procédé de détermination de paramètres physiques (Phy) d'émissions polluantes et/ou sonores et/ou de sécurité routière d'un parc prédéfini (P1) de véhicules prédéterminés sur une portion de réseau routier, le paramètre physique d'émissions polluantes étant la quantité de particules fines émises, la quantité de NOx émis ou la quantité de gaz à effet de serre émise, le paramètre physique d'émissions sonores étant le niveau de bruit, le paramètre physique de sécurité routière étant l'adhérence des véhicules au sol, le parc étant une répartition en nombre de véhicule, de chaque véhicule prédéterminé circulant sur la portion de réseau routier, chaque véhicule prédéterminé représentant un type de véhicule spécifique, dans lequel on met en œuvre , par un ordinateur, les étapes suivantes:

a) On collecte au moins les positions ($pos_{GPS}$), vitesses ($v_{GPS}$) et altitudes ($alt_{GPS}$) de véhicules traversant la portion du réseau routier par au moins un moyen de mesure de positions (posGPS), vitesses (vGPS) et altitudes (altGPS) sur ladite portion de réseau routier en réalisant plusieurs mesures de positions, vitesses et altitudes sur la même portion de réseau routier, les véhicules servant aux mesures n'étant pas nécessairement les véhicules prédéterminés du parc prédéfini, et on détermine (DET1) un profil de vitesse (pv) et un profil de pente sur ladite portion de réseau routier, le profil de vitesse (pv) correspondant à la moyenne des vitesses mesurées pour chaque point de la portion du réseau routier ;

b) On calcule (DET2) au moins une caractéristique physique (Tab) sur au moins une partie de ladite portion de réseau routier pour chacun desdits véhicules prédéterminés dudit parc prédéfini, en fonction de caractéristiques (PAR) spécifiques à chacun desdits véhicules prédéterminés dudit parc prédéfini, du profil de pente et du profil de vitesse (pv) déterminé, la caractéristique physique étant la quantité d'émissions polluantes, les émissions sonores ou le niveau d'adhérence de chaque véhicule sur la partie de portion du réseau routier, le profil de vitesse étant le même quel que soit le véhicule prédéterminé dudit parc prédéfini considéré ;

c) On obtient une distribution (Rep) desdites caractéristiques physiques sur ledit parc prédéfini, en fonction du parc prédéfini de véhicules prédéterminé, en associant à chacun des véhicules prédéterminés une valeur de la caractéristique physique déterminée et ladite répartition en multipliant chacune des caractéristiques physiques calculées par le nombre de véhicules de chaque véhicule prédéterminé correspondant dans le parc prédéfini, ;

d) On détermine (DET3) ledit paramètre physique (Phy) sur au moins ladite partie de ladite portion du réseau routier au moyen de ladite distribution (Rep) desdites caractéristiques physiques obtenue à l'étape c) en agrégeant la distribution (Rep) des caractéristiques physiques obtenues à l'étape c) et en calculant un quantile prédéterminé de la distribution des caractéristiques physiques sur le parc prédéfini (P1).

2. Procédé selon la revendication 1, pour lequel on réalise une agrégation spatiale des positions ($pos_{GPS}$) mesurées.

3. Procédé selon la revendication 2, pour lequel l'agrégation spatiale comprend une correction des positions ($pos_{GPS}$) mesurées pour correspondre à des positions de ladite portion de réseau routier.

4. Procédé selon l'une des revendications précédentes, pour lequel on découpe ladite portion de réseau routier en segments de longueur prédéterminée et on réalise les étapes b), c) et d) sur chacun desdits segments de longueur prédéterminée.

5. Procédé selon l'une des revendications précédentes, pour lequel lorsqu'on réalise ladite agrégation de la distribution (Rep, Rep_phy) desdites caractéristiques physiques, ledit paramètre physique (Phy) est pris égal à la valeur de ladite distribution (Rep, rep_phy) desdites caractéristiques physiques correspondante au soixantième centile.

6. Procédé selon l'une des revendications précédentes, pour lequel les caractéristiques des véhicules prédéterminés comprennent la masse des véhicules, le type de motorisation et le type de post-traitement des gaz-brûlés.

7. Procédé selon l'une des revendications précédentes, pour lequel on applique un flux de trafic , ledit flux de trafic comprenant de préférence le débit de véhicules sur ladite portion du réseau routier, en fonction du jour et de l'heure considérés.

8. Procédé selon l'une des revendications précédentes, pour lequel on affiche ledit paramètre physique (Phy) sur une carte routière, de préférence au moyen d'un téléphone intelligent, un ordinateur, une tablette numérique ou un système informatique.

9. Procédé selon la revendication 8, pour lequel on affiche ledit paramètre physique (Phy) sur une carte routière pour une configuration choisie par l'utilisateur, ladite configuration pouvant comprendre ledit paramètre physique (Phy) à afficher, le parc prédéfini (P1) de véhicules prédéterminés, le niveau de sensibilité dudit paramètre physique, le quantile prédéterminé et/ou le flux de trafic.

10. Procédé selon l'une des revendications précédentes, pour lequel on détermine un paramètre de confiance dudit paramètre physique.

11. Procédé selon l'une des revendications précédentes pour lequel lors de l'étape b), pour chaque véhicule prédéterminé, on acquiert au moins une caractéristique du véhicule prédéterminé (PAR) relatif à la conception dudit véhicule et on construit pour ledit véhicule :

i) un modèle dudit véhicule (MOD VEH) qui relie au moins le profil de vitesse au couple et au régime dudit moteur au moyen d'au moins une caractéristique du véhicule prédéterminé (PAR) ;

ii) un modèle dudit moteur (MOD MOT) qui relie ledit couple et ledit régime dudit moteur aux émissions de polluants et/ou sonores en sortie dudit moteur au moyen d'au moins une caractéristique du véhicule prédéterminé (PAR) ; et

iii) un modèle dudit système de post-traitement (MOD POT) qui relie lesdites émissions de polluants et/ou sonores en sortie dudit moteur au moyen aux émissions de polluants et/ou sonores en sortie dudit système de post-traitement au moyen d'au moins une caractéristique du véhicule prédéterminé (PAR) ;

et on détermine ledit couple (Cme) et ledit régime (Ne) dudit moteur au moyen dudit modèle de véhicule (MOD VEH) et dudit profil de vitesse (pv) ; on détermine les émissions de polluants (Em) et/ou sonores en sortie dudit moteur (PSME) au moyen dudit modèle du moteur (MOD MOT) et dudit couple (Cme) et dudit régime (Ne) dudit moteur ; et on détermine les émissions de polluants (Em) et/ou sonores du véhicule (PSEE) au moyen dudit modèle du système de post-traitement (MOD POT) et desdites émissions de polluants (Em) et/ou sonores en sortie dudit moteur (PSME), lesdites caractéristiques physiques étant les émissions de polluants (Em) et/ou sonores en sortie du système de post-traitement.

**12.** Produit programme d'ordinateur téléchargeable depuis un réseau de communication et/ou enregistré sur un support lisible par ordinateur et/ou exécutable par un processeur ou un serveur, comprenant des instructions de code de programme pour la mise en œuvre du procédé selon l'une des revendications précédentes, lorsque ledit programme est exécuté sur un ordinateur, un téléphone portable ou un appareil informatique.

**Patentansprüche**

**1.** Verfahren zur Bestimmung physikalischer Schadstoff- und/oder Lärmemissions- und/oder Verkehrssicherheitsparameter (Phy) eines vordefinierten Bestands (P1) vorbestimmter Fahrzeuge auf einem Straßennetzabschnitt, wobei der physikalische Schadstoffparameter die Menge des emittierten Feinstaubs, die Menge emittierter NOx oder die Menge emittierter Treibhausgase ist, wobei der physikalische Lärmemissionsparameter der Lärmpegel ist, wobei der physikalische Verkehrssicherheitsparameter die Bodenhaftung der Fahrzeuge ist, wobei der Bestand eine Aufschlüsselung nach Fahrzeugmenge jedes auf dem Straßennetzabschnitt fahrenden vorbestimmten Fahrzeugs ist, wobei jedes vorbestimmte Fahrzeug einen bestimmten Fahrzeugtyp darstellt, wobei durch einen Computer folgende Schritte umgesetzt werden:

a) Erfassen zumindest der Positionen ($pos_{GPS}$), Geschwindigkeiten ($v_{GPS}$) und Höhen ($alt_{GPS}$) der den Straßennetzabschnitt durchquerenden Fahrzeuge anhand zumindest eines Mittels zur Messung der Positionen (posGPS), Geschwindigkeiten ($v_{GPS}$) und Höhen (altGPS) auf dem Straßennetzabschnitt, indem mehrere Positions-, Geschwindigkeits- und Höhenmessungen auf demselben Straßennetzabschnitt durchgeführt werden, wobei die für die Messungen verwendeten Fahrzeuge nicht notwendigerweise die vorbestimmten Fahrzeuge des vordefinierten Bestands sind, und Bestimmen (DET1) eines Geschwindigkeitsprofils (pv) und eines Neigungsprofils auf dem Straßennetzabschnitt, wobei das Geschwindigkeitsprofil (pv) dem Durchschnitt der gemessenen Geschwindigkeiten für jeden Punkt des Straßennetzabschnitts entspricht;

b) Berechnen (DET2) mindestens eines physikalischen Merkmals (Tab) auf zumindest einem Teil des Straßennetzabschnitts für jedes der vorbestimmten Fahrzeuge des vordefinierten Bestands in Abhängigkeit von Merkmalen (PAR), die für jedes der vorbestimmten Fahrzeuge des vordefinierten Bestands spezifisch sind, des Neigungsprofils und des bestimmten Geschwindigkeitsprofils (pv), wobei das physikalische Merkmal die Menge von Schadstoffemissionen, die Lärmemissionen oder der Haftungsgrad jedes Fahrzeugs auf dem Teil des Straßennetzabschnitts ist, wobei das Geschwindigkeitsprofil unabhängig vom vorbestimmten Fahrzeug des betrachteten vordefinierten Bestands dasselbe ist;

c) Erhalten einer Verteilung (Rep) der physikalischen Merkmale über den vordefinierten Bestand in Abhängigkeit vom vordefinierten Bestand vorbestimmter Fahrzeuge, indem jedem der vorbestimmten Fahrzeuge ein Wert des bestimmten physikalischen Merkmals und die Aufschlüsselung zugeordnet werden, indem jedes der berechneten physikalischen Merkmale mit der Fahrzeuganzahl jedes entsprechenden vorbestimmten Fahrzeugs im vordefinierten Bestand multipliziert wird;

d) Bestimmen (DET3) des physikalischen Parameters (Phy) auf zumindest dem Teil des Straßennetzabschnitts anhand der in Schritt c) erhaltenen Verteilung (Rep) der physikalischen Merkmale durch Aggregieren der in Schritt c) erhaltenen Verteilung (Rep) der physikalischen Merkmale und Berechnen eines vorbestimmten Quantils der Verteilung der physikalischen Merkmale über den vordefinierten Bestand (P1).

2. Verfahren nach Anspruch 1, wobei eine räumliche Aggregation der gemessenen Positionen ($pos_{GPS}$) durchgeführt wird.

3. Verfahren nach Anspruch 2, wobei die räumliche Aggregation eine Korrektur der gemessenen Positionen ($pos_{GPS}$) umfasst, um eine Übereinstimmung mit Positionen des Straßennetzabschnitts zu erzielen.

4. Verfahren nach einem der vorangehenden Ansprüche, wobei der Straßennetzabschnitt in Segmente von vorbestimmter Länge unterteilt wird und die Schritte b), c) und d) an jedem der Segmente von vorbestimmter Länge durchgeführt werden.

5. Verfahren nach einem der vorangehenden Ansprüche, wobei bei der Durchführung der Aggregation der Verteilung (Rep, Rep_phy) der physikalischen Merkmale der physikalische Parameter (Phy) gleich dem Wert der Verteilung (Rep, rep_phy) der physikalischen Merkmale, der dem sechzigsten Perzentil entspricht, genommen wird.

6. Verfahren nach einem der vorangehenden Ansprüche, wobei die Merkmale der vorbestimmten Fahrzeuge die Fahrzeugmasse, die Art der Motorisierung und die Art der Abgasnachbehandlung umfassen.

7. Verfahren nach einem der vorangehenden Ansprüche, wobei ein Verkehrsfluss angewendet wird, wobei der Verkehrsfluss vorzugsweise den Fahrzeugdurchsatz auf dem Straßennetzabschnitt in Abhängigkeit vom betrachteten Tag und der betrachteten Uhrzeit umfasst.

8. Verfahren nach einem der vorangehenden Ansprüche, wobei der physikalische Parameter (Phy) auf einer Straßenkarte angezeigt wird, vorzugsweise mit Hilfe eines Smartphones, eines Computers, eines digitalen Tablets oder eines Informatiksystems.

9. Verfahren nach Anspruch 8, wobei der physikalische Parameter (Phy) auf einer Straßenkarte für eine vom Benutzer gewählte Konfiguration angezeigt wird, wobei die Konfiguration den anzuzeigenden physikalischen Parameter (Phy), den vordefinierten Bestand (P1) vorbestimmter Fahrzeuge, den Empfindlichkeitsgrad des physikalischen Parameters, das vorbestimmte Quantil und/oder den Verkehrsfluss umfassen kann.

10. Verfahren nach einem der vorangehenden Ansprüche, wobei ein Vertrauensparameter des physikalischen Parameters bestimmt wird.

11. Verfahren nach einem der vorangehenden Ansprüche, wobei in Schritt b) für jedes vorbestimmte Fahrzeug zumindest ein Merkmal des vorbestimmten Fahrzeugs (PAR) erfasst wird, das sich auf die Gestaltung des Fahrzeugs bezieht, und wobei für das Fahrzeug Folgendes erstellt wird:

i) ein Modell des Fahrzeugs (MOD VEH), das anhand zumindest eines Merkmals des vorbestimmten Fahrzeugs (PAR) zumindest das Geschwindigkeitsprofil mit dem Drehmoment und der Drehzahl des Motors verknüpft;
ii) ein Modell des Motors (MOD MOT), das anhand zumindest eines Merkmals des vorbestimmten Fahrzeugs (PAR) das Drehmoment und die Drehzahl des Motors mit den Schadstoff- und/oder Schallemissionen am Ausgang des Motors verknüpft; und
iii) ein Modell des Nachbehandlungssystems (MOD POT), das anhand zumindest eines Merkmals des vorbestimmten Fahrzeugs (PAR) die Schadstoff- und/oder Schallemissionen am Ausgang des Motors anhand mit den Schadstoff- und/oder Schallemissionen am Ausgang des Nachbehandlungssystems verknüpft;

und wobei das Drehmoment (Cme) und die Drehzahl (Ne) des Motors anhand des Fahrzeugmodells (MOD VEH) und des Geschwindigkeitsprofils (pv) bestimmt werden; wobei die Schafstoff- (Em) und/oder Schallemissionen des Motors (PSME) anhand des Motormodells (MOD MOT) sowie des Drehmoments (Cme) und der Drehzahl (Ne) des Motors bestimmt werden; und wobei die Schadstoff- (Em) und/oder Schallemissionen des Fahrzeugs (PSEE) anhand des Nachbehandlungssystems (MOD POT) sowie der Schadstoff- (Em) und/oder Schallemissionen am Ausgang des Motors (PSME) bestimmt werden, wobei die physikalischen Merkmale die Schadstoff- (Em) und/oder Schallemissionen am Ausgang des Nachbehandlungssystems sind.

12. Computerprogrammprodukt, das aus einem Kommunikationsnetz heruntergeladen und/oder auf einem computerlesbaren Träger gespeichert und/oder durch einen Prozessor oder einen Server ausführbar ist, umfassend Programmcodeanweisungen für die Umsetzung des Verfahrens nach einem der vorangehenden Ansprüche, wenn das Programm auf einem Computer, einem Mobiltelefon oder einem Informatikgerät ausgeführt wird.

**Claims**

1. Method for determining physical parameters (Phy) of polluting and/or sound emissions and/or road safety of a predefined fleet (P1) of predetermined vehicles on a portion of road network, the physical parameter of polluting emissions being the quantity of fine particles emitted, the quantity of NOx emitted or the quantity of greenhouse gases emitted, the physical parameter of sound emissions being the noise level, the physical parameter of road safety being the adhesion of vehicles to the ground, the fleet being a breakdown, by number of vehicles, of each predetermined vehicle travelling on the portion of road network, each predetermined vehicle representing a specific type of vehicle, wherein the following steps are implemented by a computer:

   a) at least the positions ($pos_{GPS}$), speeds ($v_{GPS}$) and altitudes ($alt_{GPS}$) of vehicles crossing the portion of the road network are collected by at least one means for measuring positions (posGPS), speeds ($v_{GPS}$) and altitudes (altGPS) on said portion of road network by performing several measurements of positions, speeds and altitudes on the same portion of road network, the vehicles used for the measurements not necessarily being the predetermined vehicles of the predefined fleet, and a speed profile (pv) and a slope profile are determined (DET1) on said portion of road network, the speed profile (pv) corresponding to the average of the speeds which are measured for each point of the portion of the road network;
   b) at least one physical characteristic (Tab) is calculated (DET2) over at least part of said portion of road network for each of said predetermined vehicles of said predefined fleet, depending on characteristics (PAR) which are specific to each of said predetermined vehicles of said predefined fleet, the slope profile and the speed profile (pv) determined, the physical characteristic being the quantity of polluting emissions, the sound emissions or the level of adhesion of each vehicle to the part of portion of the road network, the speed profile being the same whatever the predetermined vehicle of said predefined fleet under consideration;
   c) a distribution (Rep) of said physical characteristics is obtained over said predefined fleet, depending on the predefined fleet of predetermined vehicles, associating with each of the predetermined vehicles a value of the determined physical characteristic and said breakdown by multiplying each of the calculated physical characteristics by the number of vehicles of each corresponding predetermined vehicle in the predetermined fleet;
   d) said physical parameter (Phy) is determined (DET3) over at least said part of said portion of the road network by means of said distribution (Rep) of said physical characteristics which is obtained in step c) by aggregating the distribution (Rep) of the physical characteristics which are obtained in step c) and calculating a predetermined quantile of the distribution of the physical characteristics over the predefined park (P1).

2. Method according to Claim 1, for which a spatial aggregation of the measured positions ($pos_{GPS}$) is performed.

3. Method according to Claim 2, for which the spatial aggregation comprises correcting the measured positions ($pos_{GPS}$) in order to correspond to positions of said portion of road network.

4. Method according to one of the preceding claims, for which said portion of road network is divided into segments of predetermined length and steps b), c) and d) are performed on each of said segments of predetermined length.

5. Method according to one of the preceding claims, for which, when said aggregation of the distribution (Rep, Rep_phy) of said physical characteristics is performed, said physical parameter (Phy) is taken equal to the value of said distribution (Rep, rep_phy) of said physical characteristics corresponding to the sixtieth percentile.

6. Method according to one of the preceding claims, for which the characteristics of the predetermined vehicles comprise the mass of the vehicles, the type of engine and the type of aftertreatment of the exhaust gases.

7. Method according to one of the preceding claims, for which a traffic flow is applied, said traffic flow preferably comprising the throughput of vehicles on said portion of the road network, depending on the day and time under consideration.

8. Method according to one of the preceding claims, for which said physical parameter (Phy) is displayed on a road map, preferably by means of a smartphone, a computer, a digital tablet or a computer system.

9. Method according to Claim 8, for which said physical parameter (Phy) is displayed on a road map for a configuration chosen by the user, said configuration possibly comprising said physical parameter (Phy) to be displayed, the predefined fleet (P1) of predetermined vehicles, the sensitivity level of said physical parameter, the predetermined quantile and/or the traffic flow.

10. Method according to one of the preceding claims, for which a confidence parameter of said physical parameter is determined.

11. Method according to one of the preceding claims, for which, in step b), for each predetermined vehicle, at least one characteristic of the predetermined vehicle (PAR) relating to the design of said vehicle is acquired and the following are constructed for said vehicle:

> i) a model of said vehicle (MOD VEH) which links at least the speed profile to the torque and speed of said engine by means of at least one characteristic of the predetermined vehicle (PAR);
> ii) a model of said engine (MOD MOT) which links said torque and said speed of said engine to the emissions of pollutants and/or sound from said engine by means of at least one characteristic of the predetermined vehicle (PAR); and
> iii) a model of said aftertreatment system (MOD POT) which links said emissions of pollutants and/or sound from said engine by means to the emissions of pollutants and/or sound from said aftertreatment system by means of at least one characteristic of the predetermined vehicle (PAR);

and said torque (Cme) and said speed (Ne) of said engine are determined by means of said vehicle model (MOD VEH) and said speed profile (pv); the emissions of pollutants (Em) and/or sound from said engine (PSME) are determined by means of said model of the engine (MOD MOT) and said torque (Cme) and said speed (Ne) of said engine; and the emissions of pollutants (Em) and/or sound from the vehicle (PSEE) are determined by means of said model of the aftertreatment system (MOD POT) and said emissions of pollutants (Em) and/or sound from said engine (PSME), said physical characteristics being the emissions of pollutants (Em) and/or sound from the aftertreatment system.

12. Computer program product which can be downloaded from a communication network and/or stored on a medium which can be read by computer and/or can be executed by a processor or a server, comprising program code instructions for implementing the method according to one of the preceding claims, when said program is executed on a computer, a mobile phone or a computer device.

[Fig 1]

[Fig 2]

[Fig 3]

[Fig 4]

[Fig 5]

[Fig 6]

[Fig 7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **L. THIBAULT** ; **P. DEGEILH** ; **O. LEPREUX** ; **L. VOISE** ; **G. ALIX** ; **G. CORDE**. A new GPS-based method to estimate real driving emissions. *IEEE 19th International Conference on Intelligent Transportation Systems*, 2016
- **C. ASENSIO** ; **J. M. LÓPEZ** ; **R. PAGÁN** ; **I. PAVÓN** ; **M. AUSEJO**. GPS-based speed collection method for road traffic noise mapping. *Transp. Res. Part D Transp. Environ.*, 2009, vol. 14 (5), 360-366
- **R. VAIANA et al.** Driving behavior and traffic safety: an acceleration-based safety evaluation procedure for smartphones. *Mod. Appl. Sci.*, 2014, vol. 8 (1), 88
- **M. BARTH**. The Comprehensive Modal Emission Model (CMEM) for Predicting Light-Duty Vehicle Emissions. *Transportation Planning and Air Quality IV: Persistent Problems and Promising Solutions*, 2000, 126-137
- **S. HAUSBERGER** ; **M. REXEIS** ; **M. ZALLINGER** ; **R. LUZ**. PHEM User guide for version 10. *TUG/FVT Rep.*, 2010, 1-57
- **H. RAKHA** ; **K. AHN** ; **A. TRANI**. Development of VT-Micro model for estimating hot stabilized light duty vehicle and truck emissions. *Transp. Res. Part D Transp. Environ.*, 2004, vol. 9 (1), 49-74